# EUROPEAN PATENT APPLICATION

(11) **EP 4 664 293 A1**
(43) Date of publication of application: **17.12.2025**
(21) Application number: 25176601.0
(22) Date of filing: 15.05.2025
(51) Int. Cl.: G06F 11/20

(54) **PERFORMING APPLICATION-LEVEL SYNCHRONIZATION OF MANAGEMENT SYSTEM INSTANCES**

(30) Priority: 30.05.2024 IN 202411041937
(71) Applicant: Nokia Solutions and Networks Oy, 02610 Espoo (FI)
(72) Inventor: KOTALWAR, Jayant, Cupertino, 95014 (US); ANANDAMURTHY, Chandrashekhara, 560097 Bengaluru (IN); KABRA, Abhishek, 560092 Bengaluru (IN)
(74) Representative: Bryers Intellectual Property Ltd

(57) **Abstract**

Various example embodiments for supporting synchronization of management system instances of a management system providing management functions for a network are presented. The synchronization of management system instances of a management system providing management functions for a network may be supported for fabric services system instances of a fabric services system providing management functions for a data center network. The synchronization of fabric services system instances of a fabric services system providing management functions for a data center network may be supported by performing application-level data synchronization between the fabric services system instances of the fabric services system, controlling application-level data synchronization between the fabric services system instances of the fabric services system, reconciling and auditing application-level data synchronization between the fabric services system instances of the fabric services system, or the like, as well as various combinations thereof.

## Description

### TECHNICAL FIELD

Various example embodiments relate generally to communication systems and, more particularly but not exclusively, to supporting management of data center networks.

### BACKGROUND

Various communications technologies may be used to support communications in various types of communication systems.

### SUMMARY

In at least some example embodiments, an apparatus includes at least one processor and at least one memory storing instructions which, when executed by the at least one processor, cause the apparatus at least to receive, by an active application instance of an active management system instance, a set of data associated with a data center network, store, by the active application instance using a data storage element of the active management system instance, the set of data associated with the data center network, determine, by the active application instance, whether a backup application instance of a backup management system instance is able to reconstruct the set of data associated with the data center network, and control, by the active application instance based on whether the backup application instance is able to reconstruct the set of data associated with the data center network, synchronization of the set of data from the active management system instance to the backup management system instance. In at least some example embodiments, the determination as to whether the backup application instance is able to reconstruct the set of data associated with the data center network is based on at least one management function common to the active application instance and the backup application instance. In at least some example embodiments, the determination as to whether the backup application instance is able to reconstruct the set of data associated with the data center network is based on at least one of a data type of data in the set of data of the data center network or an attribute of data in the set of data of the data center network. In at least some example embodiments, the determination as to whether the backup application instance is able to reconstruct the set of data associated with the data center network is based on a database type of a database in which the active application instance stores the set of data of the data center network. In at least some example embodiments, to control synchronization of the set of data from the active management system instance to the backup management system instance, the instructions, when executed by the at least one processor, cause the apparatus at least to send, by the active application instance toward the backup application instance based on a determination that the set of data associated with the data center network cannot be reconstructed by the backup application instance, the set of data. In at least some example embodiments, to control synchronization of the set of data from the active management system instance to the backup management system instance, the instructions, when executed by the at least one processor, cause the apparatus at least to send, by the active application instance toward the backup application instance based on a determination that a first portion of data from the set of data associated with the data center network can be reconstructed by the backup application instance and a second portion of data from the set of data associated with the data center network cannot be reconstructed by the backup application instance, only the second portion of data from the set of data associated with the data center network. In at least some example embodiments, to control synchronization of the set of data from the active management system instance to the backup management system instance, the instructions, when executed by the at least one processor, cause the apparatus at least to perform, by the active application instance, synchronization of the set of data from the active management system instance to the backup management system instance based on at least one of a collection-level synchronization, a table-level synchronization, or a row-level synchronization. In at least some example embodiments, to control synchronization of the set of data from the active management system instance to the backup management system instance, the instructions, when executed by the at least one processor, cause the apparatus at least to receive, by the active application instance from a synchronization manager of the active management system instance, a request to perform a data synchronization operation with the backup application instance and provide, by the active application instance toward the synchronization manager, an indication that the data synchronization operation with the backup application instance has been completed. In at least some example embodiments, the synchronization of the set of data from the active management system instance to the backup management system instance includes at least one of a heterogeneous data transfer, a database agnostic data transfer, a collection-level data transfer, a table-level data transfer, a row-level data transfer, or an attribute-based data transfer.

In at least some example embodiments, a computer-readable storage medium stores computer program instructions which, when executed by an apparatus, cause the apparatus at least to receive, by an active application instance of an active management system instance, a set of data associated with a data center network, store, by the active application instance using a data storage element of the active management system instance, the set of data associated with the data center network, determine, by the active application instance, whether a backup application instance of a backup management system instance is able to reconstruct the set of data associated with the data center network, and control, by the active application instance based on whether the backup application instance is able to reconstruct the set of data associated with the data center network, synchronization of the set of data from the active management system instance to the backup management system instance. In at least some example embodiments, the determination as to whether the backup application instance is able to reconstruct the set of data associated with the data center network is based on at least one management function common to the active application instance and the backup application instance. In at least some example embodiments, the determination as to whether the backup application instance is able to reconstruct the set of data associated with the data center network is based on at least one of a data type of data in the set of data of the data center network or an attribute of data in the set of data of the data center network. In at least some example embodiments, the determination as to whether the backup application instance is able to reconstruct the set of data associated with the data center network is based on a database type of a database in which the active application instance stores the set of data of the data center network. In at least some example embodiments, to control synchronization of the set of data from the active management system instance to the backup management system instance, the computer program instructions, when executed by the apparatus, cause the apparatus at least to send, by the active application instance toward the backup application instance based on a determination that the set of data associated with the data center network cannot be reconstructed by the backup application instance, the set of data. In at least some example embodiments, to control synchronization of the set of data from the active management system instance to the backup management system instance, the computer program instructions, when executed by the apparatus, cause the apparatus at least to send, by the active application instance toward the backup application instance based on a determination that a first portion of data from the set of data associated with the data center network can be reconstructed by the backup application instance and a second portion of data from the set of data associated with the data center network cannot be reconstructed by the backup application instance, only the second portion of data from the set of data associated with the data center network. In at least some example embodiments, to control synchronization of the set of data from the active management system instance to the backup management system instance, the computer program instructions, when executed by the apparatus, cause the apparatus at least to perform, by the active application instance, synchronization of the set of data from the active management system instance to the backup management system instance based on at least one of a collection-level synchronization, a table-level synchronization, or a row-level synchronization. In at least some example embodiments, to control synchronization of the set of data from the active management system instance to the backup management system instance, the computer program instructions, when executed by the apparatus, cause the apparatus at least to receive, by the active application instance from a synchronization manager of the active management system instance, a request to perform a data synchronization operation with the backup application instance and provide, by the active application instance toward the synchronization manager, an indication that the data synchronization operation with the backup application instance has been completed. In at least some example embodiments, the synchronization of the set of data from the active management system instance to the backup management system instance includes at least one of a heterogeneous data transfer, a database agnostic data transfer, a collection-level data transfer, a table-level data transfer, a row-level data transfer, or an attribute-based data transfer.

In at least some example embodiments, a method includes receiving, by an active application instance of an active management system instance, a set of data associated with a data center network, storing, by the active application instance using a data storage element of the active management system instance, the set of data associated with the data center network, determining, by the active application instance, whether a backup application instance of a backup management system instance is able to reconstruct the set of data associated with the data center network, and controlling, by the active application instance based on whether the backup application instance is able to reconstruct the set of data associated with the data center network, synchronization of the set of data from the active management system instance to the backup management system instance. In at least some example embodiments, the determination as to whether the backup application instance is able to reconstruct the set of data associated with the data center network is based on at least one management function common to the active application instance and the backup application instance. In at least some example embodiments, the determination as to whether the backup application instance is able to reconstruct the set of data associated with the data center network is based on at least one of a data type of data in the set of data of the data center network or an attribute of data in the set of data of the data center network. In at least some example embodiments, the determination as to whether the backup application instance is able to reconstruct the set of data associated with the data center network is based on a database type of a database in which the active application instance stores the set of data of the data center network. In at least some example embodiments, controlling synchronization of the set of data from the active management system instance to the backup management system instance includes sending, by the active application instance toward the backup application instance based on a determination that the set of data associated with the data center network cannot be reconstructed by the backup application instance, the set of data. In at least some example embodiments, controlling synchronization of the set of data from the active management system instance to the backup management system instance includes sending, by the active application instance toward the backup application instance based on a determination that a first portion of data from the set of data associated with the data center network can be reconstructed by the backup application instance and a second portion of data from the set of data associated with the data center network cannot be reconstructed by the backup application instance, only the second portion of data from the set of data associated with the data center network. In at least some example embodiments, controlling synchronization of the set of data from the active management system instance to the backup management system instance includes performing, by the active application instance, synchronization of the set of data from the active management system instance to the backup management system instance based on at least one of a collection-level synchronization, a table-level synchronization, or a row-level synchronization. In at least some example embodiments, controlling synchronization of the set of data from the active management system instance to the backup management system instance includes receiving, by the active application instance from a synchronization manager of the active management system instance, a request to perform a data synchronization operation with the backup application instance and providing, by the active application instance toward the synchronization manager, an indication that the data synchronization operation with the backup application instance has been completed. In at least some example embodiments, the synchronization of the set of data from the active management system instance to the backup management system instance includes at least one of a heterogeneous data transfer, a database agnostic data transfer, a collection-level data transfer, a table-level data transfer, a row-level data transfer, or an attribute-based data transfer.

In at least some example embodiments, an apparatus includes means for receiving, by an active application instance of an active management system instance, a set of data associated with a data center network, means for storing, by the active application instance using a data storage element of the active management system instance, the set of data associated with the data center network, means for determining, by the active application instance, whether a backup application instance of a backup management system instance is able to reconstruct the set of data associated with the data center network, and means for controlling, by the active application instance based on whether the backup application instance is able to reconstruct the set of data associated with the data center network, synchronization of the set of data from the active management system instance to the backup management system instance. In at least some example embodiments, the determination as to whether the backup application instance is able to reconstruct the set of data associated with the data center network is based on at least one management function common to the active application instance and the backup application instance. In at least some example embodiments, the determination as to whether the backup application instance is able to reconstruct the set of data associated with the data center network is based on at least one of a data type of data in the set of data of the data center network or an attribute of data in the set of data of the data center network. In at least some example embodiments, the determination as to whether the backup application instance is able to reconstruct the set of data associated with the data center network is based on a database type of a database in which the active application instance stores the set of data of the data center network. In at least some example embodiments, the means for controlling synchronization of the set of data from the active management system instance to the backup management system instance includes means for sending, by the active application instance toward the backup application instance based on a determination that the set of data associated with the data center network cannot be reconstructed by the backup application instance, the set of data. In at least some example embodiments, the means for controlling synchronization of the set of data from the active management system instance to the backup management system instance includes means for sending, by the active application instance toward the backup application instance based on a determination that a first portion of data from the set of data associated with the data center network can be reconstructed by the backup application instance and a second portion of data from the set of data associated with the data center network cannot be reconstructed by the backup application instance, only the second portion of data from the set of data associated with the data center network. In at least some example embodiments, the means for controlling synchronization of the set of data from the active management system instance to the backup management system instance includes means for performing, by the active application instance, synchronization of the set of data from the active management system instance to the backup management system instance based on at least one of a collection-level synchronization, a table-level synchronization, or a row-level synchronization. In at least some example embodiments, the means for controlling synchronization of the set of data from the active management system instance to the backup management system instance includes means for receiving, by the active application instance from a synchronization manager of the active management system instance, a request to perform a data synchronization operation with the backup application instance and means for providing, by the active application instance toward the synchronization manager, an indication that the data synchronization operation with the backup application instance has been completed. In at least some example embodiments, the synchronization of the set of data from the active management system instance to the backup management system instance includes at least one of a heterogeneous data transfer, a database agnostic data transfer, a collection-level data transfer, a table-level data transfer, a row-level data transfer, or an attribute-based data transfer.

In at least some example embodiments, an apparatus includes at least one processor and at least one memory storing instructions which, when executed by the at least one processor, cause the apparatus at least to receive, by a backup application instance of a backup management system instance from an active application instance of an active management system instance, a first set of data associated with a data center network, identify, by the backup application instance, a second set of data associated with the data center network and available to the active application instance, reconstruct, by the backup application instance, the second set of data associated with the data center network, and store, by the backup application instance, the first set of data associated with the data center network and the second set of data associated with the data center network. In at least some example embodiments, the receipt of the first set of data associated with the data center network is based on at least one of a heterogeneous data transfer, a database agnostic data transfer, a collection-level data transfer, a table-level data transfer, a row-level data transfer, or an attribute-based data transfer. In at least some example embodiments, the identification of the second set of data associated with the data center network is based on at least one management function common to the active application instance and the backup application instance. In at least some example embodiments, the identification of the second set of data associated with the data center network is based on at least one of a data type of data in the first set of data of the data center network or an attribute of data in the first set of data of the data center network. In at least some example embodiments, the identification of the second set of data associated with the data center network is based on a database type of a database in which the backup application instance stores the first set of data of the data center network. In at least some example embodiments, the second set of data associated with the data center network is reconstructed based on at least a portion of the first set of data associated with the data center network. In at least some example embodiments, the instructions, when executed by the at least one processor, cause the apparatus at least to receive, by the backup application instance from the active application instance, a request to perform a data synchronization operation with the active application instance and provide, by the backup application instance toward the active application instance, an indication that the data synchronization operation with the active application instance has been completed. In at least some example embodiments, the instructions, when executed by the at least one processor, cause the apparatus at least to receive, by the backup application instance from a backup synchronization manager of the backup management system instance, a request to perform a data synchronization operation with the active application instance and provide, by the backup application instance toward the backup synchronization manager, an indication that the data synchronization operation with the active application instance has been completed. In at least some example embodiments, the instructions, when executed by the at least one processor, cause the apparatus at least to perform, by the backup management system instance based on a request for the backup management system instance to take over responsibility for management of the data center network, management of the data center network based on the first set of data and the second set of data.

In at least some example embodiments, a computer-readable storage medium stores computer program instructions which, when executed by an apparatus, cause the apparatus at least to receive, by a backup application instance of a backup management system instance from an active application instance of an active management system instance, a first set of data associated with a data center network, identify, by the backup application instance, a second set of data associated with the data center network and available to the active application instance, reconstruct, by the backup application instance, the second set of data associated with the data center network, and store, by the backup application instance, the first set of data associated with the data center network and the second set of data associated with the data center network. In at least some example embodiments, the receipt of the first set of data associated with the data center network is based on at least one of a heterogeneous data transfer, a database agnostic data transfer, a collection-level data transfer, a table-level data transfer, a row-level data transfer, or an attribute-based data transfer. In at least some example embodiments, the identification of the second set of data associated with the data center network is based on at least one management function common to the active application instance and the backup application instance. In at least some example embodiments, the identification of the second set of data associated with the data center network is based on at least one of a data type of data in the first set of data of the data center network or an attribute of data in the first set of data of the data center network. In at least some example embodiments, the identification of the second set of data associated with the data center network is based on a database type of a database in which the backup application instance stores the first set of data of the data center network. In at least some example embodiments, the second set of data associated with the data center network is reconstructed based on at least a portion of the first set of data associated with the data center network. In at least some example embodiments, the computer program instructions, when executed by the apparatus, cause the apparatus at least to receive, by the backup application instance from the active application instance, a request to perform a data synchronization operation with the active application instance and provide, by the backup application instance toward the active application instance, an indication that the data synchronization operation with the active application instance has been completed. In at least some example embodiments, the computer program instructions, when executed by the apparatus, cause the apparatus at least to receive, by the backup application instance from a backup synchronization manager of the backup management system instance, a request to perform a data synchronization operation with the active application instance and provide, by the backup application instance toward the backup synchronization manager, an indication that the data synchronization operation with the active application instance has been completed. In at least some example embodiments, the computer program instructions, when executed by the apparatus, cause the apparatus at least to perform, by the backup management system instance based on a request for the backup management system instance to take over responsibility for management of the data center network, management of the data center network based on the first set of data and the second set of data.

In at least some example embodiments, a method includes receiving, by a backup application instance of a backup management system instance from an active application instance of an active management system instance, a first set of data associated with a data center network, identifying, by the backup application instance, a second set of data associated with the data center network and available to the active application instance, reconstructing, by the backup application instance, the second set of data associated with the data center network, and storing, by the backup application instance, the first set of data associated with the data center network and the second set of data associated with the data center network. In at least some example embodiments, the receipt of the first set of data associated with the data center network is based on at least one of a heterogeneous data transfer, a database agnostic data transfer, a collection-level data transfer, a table-level data transfer, a row-level data transfer, or an attribute-based data transfer. **In** at least some example embodiments, the identification of the second set of data associated with the data center network is based on at least one management function common to the active application instance and the backup application instance. In at least some example embodiments, the identification of the second set of data associated with the data center network is based on at least one of a data type of data in the first set of data of the data center network or an attribute of data in the first set of data of the data center network. In at least some example embodiments, the identification of the second set of data associated with the data center network is based on a database type of a database in which the backup application instance stores the first set of data of the data center network. In at least some example embodiments, the second set of data associated with the data center network is reconstructed based on at least a portion of the first set of data associated with the data center network. In at least some example embodiments, the method includes receiving, by the backup application instance from the active application instance, a request to perform a data synchronization operation with the active application instance and providing, by the backup application instance toward the active application instance, an indication that the data synchronization operation with the active application instance has been completed. In at least some example embodiments, the method includes receiving, by the backup application instance from a backup synchronization manager of the backup management system instance, a request to perform a data synchronization operation with the active application instance and providing, by the backup application instance toward the backup synchronization manager, an indication that the data synchronization operation with the active application instance has been completed. In at least some example embodiments, the method includes performing, by the backup management system instance based on a request for the backup management system instance to take over responsibility for management of the data center network, management of the data center network based on the first set of data and the second set of data.

In at least some example embodiments, an apparatus includes means for receiving, by a backup application instance of a backup management system instance from an active application instance of an active management system instance, a first set of data associated with a data center network, means for identifying, by the backup application instance, a second set of data associated with the data center network and available to the active application instance, means for reconstructing, by the backup application instance, the second set of data associated with the data center network, and means for storing, by the backup application instance, the first set of data associated with the data center network and the second set of data associated with the data center network. In at least some example embodiments, the receipt of the first set of data associated with the data center network is based on at least one of a heterogeneous data transfer, a database agnostic data transfer, a collection-level data transfer, a table-level data transfer, a row-level data transfer, or an attribute-based data transfer. In at least some example embodiments, the identification of the second set of data associated with the data center network is based on at least one management function common to the active application instance and the backup application instance. In at least some example embodiments, the identification of the second set of data associated with the data center network is based on at least one of a data type of data in the first set of data of the data center network or an attribute of data in the first set of data of the data center network. In at least some example embodiments, the identification of the second set of data associated with the data center network is based on a database type of a database in which the backup application instance stores the first set of data of the data center network. In at least some example embodiments, the second set of data associated with the data center network is reconstructed based on at least a portion of the first set of data associated with the data center network. In at least some example embodiments, the apparatus includes means for receiving, by the backup application instance from the active application instance, a request to perform a data synchronization operation with the active application instance and means for providing, by the backup application instance toward the active application instance, an indication that the data synchronization operation with the active application instance has been completed. In at least some example embodiments, the apparatus includes means for receiving, by the backup application instance from a backup synchronization manager of the backup management system instance, a request to perform a data synchronization operation with the active application instance and means for providing, by the backup application instance toward the backup synchronization manager, an indication that the data synchronization operation with the active application instance has been completed. In at least some example embodiments, the apparatus includes means for performing, by the backup management system instance based on a request for the backup management system instance to take over responsibility for management of the data center network, management of the data center network based on the first set of data and the second set of data.

### BRIEF DESCRIPTION OF THE DRAWINGS

The teachings herein can be readily understood by considering the following detailed description in conjunction with the accompanying drawings, in which:
FIG. 1 depicts an example embodiment of a data center system including a data center and a fabric services system configured to manage the data center based on use of multiple fabric services system instances of the fabric services system;
FIG. 2 depicts an example embodiment of a fabric services system configured to manage the data center based on use of multiple fabric services system instances of the fabric services system;
FIG. 3 depicts an example embodiment for performing application-level synchronization of data between fabric services system instances of a fabric services system;
FIG. 4 depicts an example embodiment of a method for use by an active application instance of an active management system instance to support application-level synchronization of data with a backup application instance of a backup management system instance
FIG. 5 depicts an example embodiment of a method for use by a backup application instance of a backup management system instance to support application-level synchronization of data with an active application instance of an active management system instance;
FIG. 6 depicts an example embodiment for controlling application-level synchronization of data between fabric services system instances of a fabric services system;
FIG. 7 depicts an example embodiment of a method for use by an active synchronization manager of an active management system instance to support control over application-level synchronization of data between an active application instance of the active management system instance and a backup application instance of a backup management system instance;
FIG. 8 depicts an example embodiment of a method for use by an active application instance of an active management system instance to support control over application-level synchronization of data between the active management system instance and a backup management system instance;
FIG. 9 depicts an example embodiment of a method for use by a backup application instance of a backup management system instance to support control over application-level synchronization of data between the backup management system instance and an active management system instance;
FIG. 10 depicts an example embodiment of a method for use by a backup synchronization manager of a backup management system instance to support control over application-level synchronization of data between a backup application instance of the backup management system instance and an active application instance of an active management system instance;
FIG. 11 depicts an example embodiment for reconciling and auditing application-level synchronization of data between fabric services system instances of a fabric services system;
FIG. 12 depicts an example embodiment of a method for use by an active management system instance for supporting reconciling and auditing of application-level synchronization of data between the active management system instance and a backup management system instance;
FIG. 13 depicts an example embodiment of a method for use by a backup management system instance for supporting reconciling and auditing of application-level synchronization of data between the backup management system instance and an active management system instance; and
FIG. 14 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

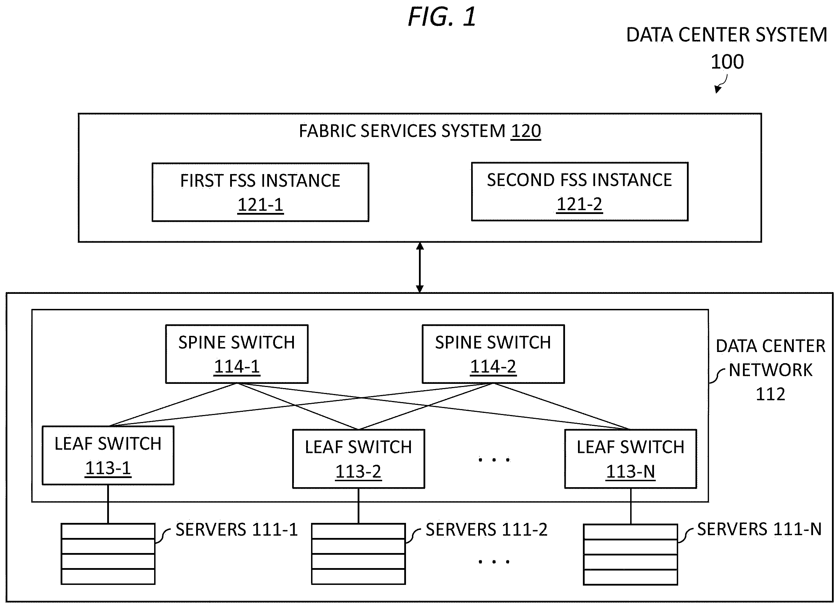

Various example embodiments for supporting synchronization of management system instances of a management system providing management functions for a network are presented. The synchronization of management system instances of a management system providing management functions for a network may be supported for fabric services system instances of a fabric services system providing management functions for a data center network. The synchronization of fabric services system instances of a fabric services system providing management functions for a data center network may be supported by performing application-level data synchronization between the fabric services system instances of the fabric services system. The synchronization of fabric services system instances of a fabric services system providing management functions for a data center network may be supported by controlling application-level data synchronization between the fabric services system instances of the fabric services system. The synchronization of fabric services system instances of a fabric services system providing management functions for a data center network may be supported by reconciling and auditing application-level data synchronization between the fabric services system instances of the fabric services system. It will be appreciated that these and various other example embodiments for supporting synchronization of management system instances of a management system providing management functions for a network, including for supporting synchronization of fabric services system instances of a fabric services system providing management functions for a data center network, may be further understood by way of reference to FIG. 1, which illustrates an example embodiment of a data center system including a data center and a fabric services system configured to manage the data center based on use of multiple fabric services system instances of the fabric services system.

FIG. 1 depicts an example embodiment of a data center system including a data center and a fabric services system configured to manage the data center based on use of multiple fabric services system instances of the fabric services system.

The data center system 100 includes a data center 110 and a fabric services system (FSS) 120 configured to perform management functions for the data center 110. The data center 110 includes servers 111 and a data center network 112. The servers 111 are configured to provide processing resources (e.g., compute, memory, storage, connectivity, or the like) for supporting various processing capabilities (e.g., applications, tasks, or the like) for various entities (e.g., tenants, clients, or the like). The data center network 112 is configured to provide various communications resources (e.g., switches, routers, firewalls, or the like) configured to support communications of the servers 111. The data center network 112 may be implemented using a spine-leaf architecture (e.g., with leaf switches connected to server racks, respectively, and one or more leaf switches providing full connectivity between the leaf switches) or other suitable data center network architecture. In FIG. 1, for example, the data center 110 includes M server racks having M sets of servers 111, and the data center network 112 includes M leaf switches 113-1 to 113-M (collectively, leaf switches 113) which are each connected to each of two spine switches 114-1 to 114-2 (collectively, spine switches 114). The FSS 120 is configured to perform management functions for the data center 110. For example, the management functions may include intent management, topology management, operational topology management, or the like, as well as various combinations thereof. It is noted that the data center 100 may include various other elements, may be configured in various other ways, or the like, as well as various combinations thereof.

The FSS 120 is configured to perform management functions for the data center 110 based on a pair of FSS instances 121 including a first FSS instance 121-1 and a second FSS instance 121-2. The FSS 120 is configured to perform management functions for the data center 110 based on configuration of each of the FSS instances 121 to perform the management functions for the data center 110 (e.g., both the first FSS instance 121-1 and the second FSS instance 121-2 are configured to perform the management functions for the data center 110 such that, whichever FSS instance 121 is operating in the role of the active FSS instance at any given time is capable of performing the management functions for the data center 110). The FSS instances 121 are configured to provide redundancy for management of the data center 110. The FSS instances 121 may be configured to provide various types of redundancy for management of the data center 110, including hardware redundancy, geographic redundancy (e.g., first FSS instance 121-1 may be in New York while second FSS instance 121-2 may be in Los Angeles), or the like, as well as various combinations thereof. The FSS instances 121 are configured to support failover for reliability purposes. For example, where the first FSS instance 121-1 is operating in the role of the active FSS instance and the second FSS instance 121-2 is operating in the role of the backup FSS instance, and the first FSS instance 121-1 experiences a problem impacting its ability to continue to operate in the role of the active FSS instance, a failover operation is performed such that the second FSS instance 121-2 takes over the role of operating as the active FSS instance at least until the problem is resolved. In this manner, the FSS instances 121 enable the FSS 120 to provide reliable management of the data center 110.

It will be appreciated that the data center system 100, although primarily presented as having a specific configuration, may be configured in various other ways.

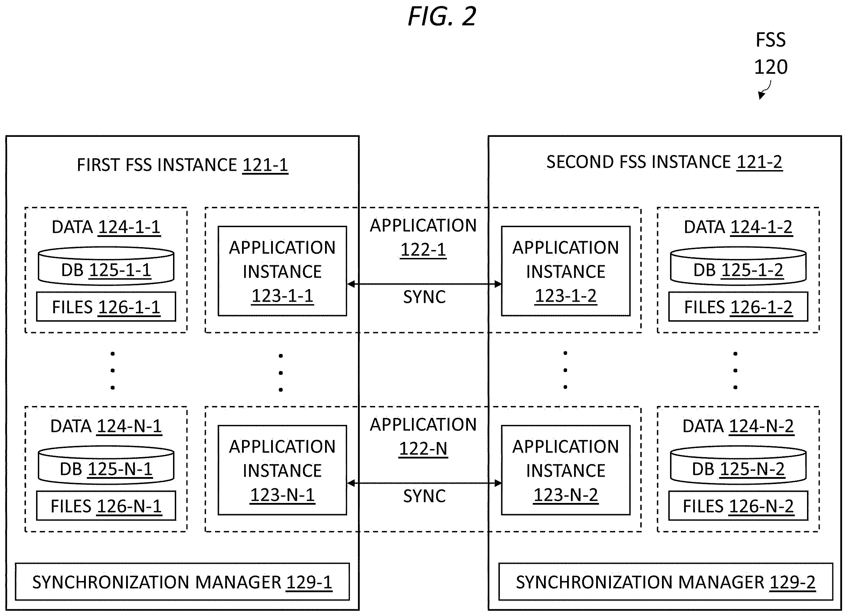

FIG. 2 depicts an example embodiment of a fabric services system configured to manage the data center based on use of multiple fabric services system instances of the fabric services system.

As illustrated in FIG. 2, the FSS 120 is includes a pair of FSS instances 121 including a first FSS instance 121-1 and a second FSS instance 121-2. The FSS 120 is configured to perform management functions for the data center 110 (which is omitted from FIG. 2 for purposes of clarity) based on configuration of each of the FSS instances 121 to perform the management functions for the data center 110 (e.g., both the first FSS instance 121-1 and the second FSS instance 121-2 are configured to perform the management functions for the data center 110 such that, whichever FSS instance 121 is operating in the role of the active FSS instance at any given time is capable of performing the management functions for the data center 110). The FSS instances 121 are configured to provide redundancy for management of the data center 110. The FSS instances 121 may be configured to provide various types of redundancy for management of the data center 110, including hardware redundancy, geographic redundancy (e.g., first FSS instance 121-1 may be in New York while second FSS instance 121-2 may be in Los Angeles), or the like, as well as various combinations thereof. The FSS instances 121 are configured to support failover for reliability purposes. For example, where the first FSS instance 121-1 is operating in the role of the active FSS instance and the second FSS instance 121-2 is operating in the role of the backup FSS instance, and the first FSS instance 121-1 experiences a problem impacting its ability to continue to operate in the role of the active FSS instance, a failover operation is performed such that the second FSS instance 121-2 takes over the role of operating as the active FSS instance at least until the problem is resolved. In this manner, the FSS instances 121 enable the FSS 120 to provide reliable management of the data center 110.

The FSS 120 is configured to perform management functions for the data center 110 based on a set of applications 122-1 - 122-N (collectively, applications 122). The applications 122 may support various management functions or combinations of management functions (e.g., the application 122-1 may be an intent management application, the application 122-2 may be a topology management application, the application 122-3 may be an operational topology management application, and so forth). The applications 122 are implemented as pairs of application instances 123 on the FSS instances 121 (e.g., the application 122-1 is composed of an application instance 123-1-1 on the first FSS instance 121-1 and an application instance 123-1-2 on the second FSS instance 121-2, the application 122-2 is composed of an application instance 123-2-1 on the first FSS instance 121-1 and an application instance 123-2-2 on the second FSS instance 121-2, and so forth, with the application 122-N being composed of an application instance 123-N-1 on the first FSS instance 121-1 and an application instance 123-N-2 on the second FSS instance 121-2). The application instances 123-x-1 and 123-x-2 in a pair of application instances 123-x for an application 122-x are configured to support the management functions of the application 122-x (i.e., the pair of application instances 123-x for the application 122-x support the same management functions such that the pair of application instances 123-x for the application 122-x provides redundancy for the management functions of the application 122-x as part of the FSS instances 121 of the FSS 120). The applications 122 may be implemented as microservices and, thus, also may be referred to herein as microservices.

The FSS 120 is configured to perform management functions for the data center 110 based on storage of data 124 associated with the data center 110. The data 124 may include configuration data (e.g., configuration data describing configuration of the data center network 112 to support communications of the data center 110), operational data (e.g., operational data associated with the operation of the data center network 112 to support communications of the data center 110), other data associated with management of the data center network 112 to support communications of the data center 110, or the like, as well as various combinations thereof. For example, the data 124 may include configuration data such as intent data (e.g., intent summaries, intent descriptions, intent configurations, intent statuses, or the like, as well as various combinations thereof), topology data (e.g., node lists, interface lists, link lists, node configurations, interface configurations, link configurations, or the like, as well as various combinations thereof, or the like, as well as various combinations thereof. For example, the data 124 may include operational data such as statistics, status information, event information (e.g., for alerts, alarms, or the like, as well as various combinations thereof), or the like, as well as various combinations thereof. For example, the data 124 may include other data, such as certificates, keys, or the like. It will be appreciated that the data 124 may include any other information which may be used by the FSS 120 to perform management functions for the data center 110.

The FSS 120, as indicated above, is configured to perform management functions for the data center 110 based on storage of data 124 associated with the data center 110. The data 124 maintained by the FSS instances 121 of the FSS 120 for the data center 110 may be stored in various ways. The data 124 maintained by the FSS instances 121 may be stored using databases 125 (e.g., for configuration data and operational data) and files 126 (e.g., for other types of data, such as certificates, keys, and so forth). The data 124 may be stored using databases 125 and files 126 such that, for each application 122-x, the first application instance 123-x-1 on the first FSS instance 121-1 for the application 122-x may store data 124-x-1 using a database 125-x-1 and files 126-x-1 and the second application instance 123-x-2 on the second FSS instance 121-2 for the application 122-x may store data 124-x-2 using a database 125-x-2 and files 126-x-2 (where the databases 125-x-1 and 125-x-2 may be referred to collectively as databases 125-x and the files 126-x-1 and 126-x-2 may be referred to collectively as files 126-x). For example, for the first application 122-1 the first application instance 123-1-1 on the first FSS instance 121-1 may store data 124-1-1 using a database 125-1-1 and a set of files 126-1-1 and the second application instance 123-1-2 on the second FSS instance 121-2 may store data 124-1-2 using a database 125-1-2 and a set of files 126-1-2, and so forth, such that for the N-th application 122-N the first application instance 123-N-1 on the first FSS instance 121-1 may store data 124-N-1 using a database 125-N-1 and a set of files 126-N-1 and the second application instance 123-N-2 on the second FSS instance 121-2 may store data 124-N-2 using a database 125-N-2 and a set of files 126-N-2. The data 124 maintained by the FSS instances 121 of the FSS 120 for the data center 110 may be stored in various other ways.

The FSS 120 is configured to perform management functions for the data center 110 based on the data 124. The FSS 120 may be configured to provide redundancy of management functions for the data center 110 by ensuring that the data 124 accessible to the FSS instances 121 of the FSS 120 is sufficient to provide redundancy of management functions by the FSS instances 121 of the FSS 120 for the data center 110. The one of the FSS instances 121-x operating as the active FSS instance utilizes the stored data 124-x to provide management functions for the data center 110 as the one of the FSS instances 121-x operates in the role of the active FSS instance and updates the stored data 124-x as the one of the FSS instances 121-x operates in the role of the active FSS instance (such that the data 124-x stored by the one of the FSS instances 121-x that operates in the role of the active FSS instance is the full set of data needed to manage the data center 110), while the one of the FSS instances 121-y operating as the backup FSS instance needs to maintain data 124-y that is sufficient to enable the one of the FSS instances 121-y operating as the backup FSS instance to switch to operating as the active FSS instance when a failover operation is executed (such that the data 124-y stored by the one of the FSS instances 121-y that operates in the role of the backup FSS instance may be a subset of the data needed to manage the data center 110). The FSS 120 may be configured to support improved synchronization of data 124 between the FSS instances 121 to provide resiliency for management of the data center 110.

The FSS 120, as noted above, may be configured to support improved synchronization of data 124 between the FSS instances 121 to provide resiliency for management of the data center 110. Namely, while the FSS 120 may be configured to support synchronization of the full set of data 124 between the FSS instances 121 of the FSS 120, support for such data synchronization may be resource-intensive (e.g., in terms of processing resources, memory resources, storage resources, communication resources, and so forth). The FSS 120 may be configured to support more efficient synchronization of data 124 between the FSS instances 121 of the FSS 120 by only synchronizing a portion of the data 124 between the FSS instances 121 of the FSS 120, thereby reducing the resources consumed by synchronization of data 124 between the FSS instances 121 of the FSS 120 (e.g., reducing the amount of processing resources, memory resources, storage resources, and communication resources utilized for data synchronization between the FSS instances 121 of the FSS 120), and allowing remaining portions of the data 124 to be reconstructed locally by the FSS instances 121 of the FSS 120 to provide the complete sets of data 124 used by the FSS instances 121 of the FSS 120 for management of the data center 110. The FSS 120 may be configured to support improved synchronization of data 124 between the FSS instances 121, to provide resiliency for management of the data center 110, by supporting application-level synchronization of data 124 between the FSS instances 121 of the FSS 120.

The FSS 120 may be configured to support application-level synchronization of data 124 between the FSS instances 121 of the FS 120. The application-level synchronization of data 124 between the FSS instances 121 may be provided by enabling each application 122-x of the FSS 120 to individually control synchronization of its data 124-x between its application instances 123-x-1 and 123-x-2 independent of any other application 122-y of the FSS 120 (e.g., the application instance 123-x operating in the active role determines data that cannot be reconstructed by the application instance 123-x operating in the backup role and syncs that data that cannot be reconstructed by the application instance 123-x operating in the backup role, but does not sync data that can be reconstructed by the application instance 123-x operating in the backup role). The two application instances 123-x-1 and 123-x-2 of the application 122-x may cooperate to support application-level synchronization of the data 124-x between the application instances 123-x-1 and 123-x-2 of the application 122-x. The two application instances 123-x-1 and 123-x-2 of the application 122-x may cooperate to support application-level synchronization of the data 124-x between the application instances 123-x-1 and 123-x-2 of the application 122-x by supporting synchronization of only a subset of the data 124-x between the application instances 123-x-1 and 123-x-2 of the application 122-x (e.g., data that cannot be reconstructed) and enabling local reconstruction of any remaining portions of the data 124-x which are not synchronized between the application instances 123-x-1 and 123-x-2 of the application 122-x. This type of application level data synchronization ensures that each application 122-x of the FSS 120 is able to intelligently control data synchronization in a manner that ensures that each application 122-x of the FSS 120 has the data 124-x needed to manage the data center 110 and, thus, both of the FSS instances 121 of the FS 120 are configured to operate to manage the data center 110, thereby enabling the FSS 120 to support resilient management of the data center 110.

The FSS 120 may be configured to support application-level synchronization of data 124 between the FSS instances 121 of the FS 120 based on application level selection of portions of the data 124 to be synchronized, and then synchronizing the portions of the data 124 selected to be synchronized. For a particular application 122-x, the application instance 123-x-1 operating in the role of the active application instance may select a subset of the data 124-x to be synchronized and provide the selected subset of the data 124-x to the application instance 123-x-2 operating in the role of the backup application instance. The application instance 123-x-1 operating in the role of the active application instance may select the subset of the data 124-x to be synchronized by selecting the portion of the data 124-x that the application instance 123-x-1 determines is unable to be reconstructed by the application instance 123-x-2 operating in the role of the backup application instance (namely, since the application instance 123-x-1 operating in the role of the active application instance determines that this portion of the data 124-x cannot be reconstructed by the application instance 123-x-2 operating in the role of the backup application instance, the application instance 123-x-1 operating in the role of the active application instance needs to provide this portion of the data 124-x to the application instance 123-x-2 operating in the role of the backup application instance). The application instance 123-x-1 operating in the role of the active application instance may select the subset of the data 124-x to be synchronized based on at least one of at least one management function common to the application instances 123-x, data types of the data 124-x used by the application instances 123-x, attributes of the data 124-x used by the application instances 123-x, database types of the databases used by the application instances 123-x to store the data 124-x, or the like, as well as various combinations thereof.

The FSS 120 may be configured to support application-level synchronization of data 124 between the FSS instances 121 of the FS 120 based on application level selection of portions of the data 124 for which syncing is to be skipped and the data is to be reconstructed, and then locally reconstructing the portions of the data 124 selected not to be synchronized. The application instance 123-x-2 operating in the role of the backup application instance may obtain the full set of data 124-x-2 needed to support management of the data center 110 by (1) receiving a portion of the data 124-x-1 which was selected by the application instance 123-x-1 to be synchronized and, thus, was provided by the application instance 123-x-1 to the application instance 123-x-2 and (2) reconstructing a portion of the data 124-x-1 which was selected by the application instance 123-x-1 not to be synchronized and, thus, was not provided by the application instance 123-x-1 to the application instance 123-x-2 as part of application level data syncing. The application instance 123-x-2 may reconstruct the portion of the data 124-x-1 which was selected by the application instance 123-x-1 not to be synchronized based on the portion of the data 124-x-1 which was selected by the application instance 123-x-1 to be synchronized and that was received by the application instance 123-x-2 from the application instance 123-x-1. The application instance 123-x-2 may reconstruct the portion of the data 124-x-1 which was selected by the application instance 123-x-1 not to be synchronized based on at least one of at least one management function common to the application instances 123-x, data types of the data 124-x used by the application instances 123-x, attributes of the data 124-x used by the application instances 123-x, database types of the databases used by the application instances 123-x to store the data 124-x, or the like, as well as various combinations thereof.

The FSS 120 may be configured to support application-level synchronization of the data 124 between the application instances 123 of the applications 122 based on use of synchronous synchronization operations and/or asynchronous synchronization operations. The application-level synchronization of data 124-x of an application 122-x between the application instances 123-x of the application 122-x may be synchronous, in which case each synchronization operation or message provided from the application instance 123-x operating in the active role to the application instance 123-x operating in the backup role is acknowledged by the application instance 123-x operating in the backup role to the application instance 123-x operating in the active role before the application instance 123-x operating in the active role sends the next synchronization operation or message to the application instance 123-x operating in the backup role. The application-level synchronization of data 124-x of an application 122-x between the application instances 123-x of the application 122-x may be asynchronous, in which case the application instance 123-x operating in the active role may continuously send synchronization operations or messages to the application instance 123-x operating in the backup role without waiting for acknowledgments from the application instance 123-x operating in the backup role, and the application instance 123-x operating in the backup role receives and processes the synchronization operations or messages without acknowledging the synchronization operations or messages back to the application instance 123-x operating in the active role. It will be appreciated that use of synchronous synchronization operations or asynchronous synchronization operations may be applied at the application level, such that one or more of the applications 122 may use synchronous synchronization operations and/or one or more of the applications 122 may use asynchronous synchronization operations.

The FSS 120 may be configured to support application-level synchronization of the data 124 between the application instances 123 of the applications 122 at various granularities. The application-level synchronization of data 124 between the FSS instances 121 may be performed at one or more of the collection level, the table level, the row level, or the like, as well as various combinations thereof. The application-level synchronization of data 124-x of an application 122-x between the application instances 123-x of the application 122-x may be performed at one or more of the collection level, the table level, the row level, or the like, as well as various combinations thereof. It will be appreciated that different ones of the applications 122 may use different types of granularity for application-level synchronization of the data 124 between the application instances 123 of the applications 122 for different functions supported by the different applications 122, different data types supported by the different applications 122, different database types used by the different applications 122, or the like, as well as various combinations thereof. It will be appreciated that application-level synchronization of the data 124 between the application instances 123 of the applications 122 may be provided at various other granularities or combinations of granularities.

The FSS 120 may be configured to support application-level synchronization of the data 124 between the application instances 123 of the applications 122 as follows. The application-level synchronization of data 124-x of an application 122-x between the application instances 123-x of the application 122-x may be performed by determining, by one of the application instances 123-x-1 operating in the active role based on a set of data evaluation criteria (e.g., a database type of a database storing the data 124-x-1 of the one of application instances 123-x-1 operating in the active role and a database type of a database storing the data 124-x-2 of the one of application instances 123-x-1 operating in the backup role, one or more data types of the data 124-x-1 of the one of application instances 123-x-1 operating in the active role, attributes of individual data records of the data 124-x-1 of the one of application instances 123-x-1 operating in the active role, or the like, as well as various combinations thereof), a first portion of the data 124-x-1 to be synchronized with the one of the application instances 123-x-2 operating in the backup role and a second portion of the data 124-x-1 not to be synchronized with the one of the application instances 123-x-2 operating in the backup role and performing, by one of the application instances 123-x-1 operating in the active role, application-level synchronization that includes syncing the first portion of the data 124-x-1 to be synchronized with the one of the application instances 123-x-2 operating in the backup role and preventing syncing of the second portion of the data 124-x-1 not to be synchronized with the one of the application instances 123-x-2 operating in the backup role. It will be appreciated that various other functions may be supported.

The FSS 120 may be configured to support application-level synchronization of the data 124 between the application instances 123 of the applications 122 as follows. The application-level synchronization of data 124-x of an application 122-x between the application instances 123-x of the application 122-x may be performed by identifying, by the one of the application instances 123-x-1 operating in the active role, a data element of a database storing data 124-x-1 (e.g., the data element may be a collection, a table, or an individual data record), determining, by the one of the application instances 123-x-1 operating in the active role, whether the data element includes configuration data or operational data, determining, by the one of the application instances 123-x-1 operating in the active role based on a determination that the data element includes configuration data and based on a set of management functions supported by the application 122-x, whether the data element is capable of being reconstructed by one of the application instances 123-x-2 operating in the backup role, and controlling, by the one of the application instances 123-x-1 operating in the active role with the one of the application instances 123-x-2 operating in the backup role, synchronization of the data element from the one of the application instances 123-x-1 operating in the active role to the one of the application instances 123-x-2 operating in the backup role. It will be appreciated that various other functions may be supported.

The FSS 120 may be configured to support application-level synchronization of the data 124 between the application instances 123 of the applications 122 as follows. The application-level synchronization of data 124 of the applications 122 may include maintaining a database storing data for a first application 122-1 and storing data for a second application 122-2, determining, by a first application instance 123-1-1 of the first application 122-1 that is operating in an active role based on one or more management functions supported by the first application 122-1, a first portion of data of the database to be synchronized with the second application instance 123-1-2 of the first application 122-2, determining, by a first application instance 123-1-1 of the second application 122-2 that is operating in an active role based on one or more management functions supported by the second application 122-2, a second portion of data of the database to be synchronized with the second application instance 123-2-2 of the second application 122-2, and controlling syncing of the data by controlling by the first application instance 123-1-1 of the first application 122-1 that is operating in the active role synchronization of the first portion of the data with the second application instance 123-1-2 of the first application 122-1 that is operating in the backup role and controlling by the first application instance 123-2-1 of the second application 122-2 that is operating in the active role synchronization of the second portion of the data with the second application instance 123-2-2 of the second application 122-2 that is operating in the backup role. The first portion of data of the database identified by the first application 122-1 and the second portion of data of the database identified by the second application 122-2 may be different (e.g., due to the different management functions supported by the two applications 122). The first portion of data of the database identified by the first application 122-1 and the second portion of data of the database identified by the second application 122-2 may both include configuration data while omitting operational data which may be reconstructed by the applications instances 123-1-2 and 123-2-2 operating in the backup role for the applications 122-1 and 122-2 respectively. It will be appreciated that various other functions may be supported.

The FSS 120 may be configured to control application-level synchronization of data 124 between the FSS instances 121 of the FS 120 based on use of a synchronization manager 129-1 provided on the first FSS instance 121-1 and a synchronization manager 129-2 provided on the second FSS instance 121-2 (where such synchronization managers 129-1 and 129-2 may be referred to collectively as synchronization managers 129). The synchronization manager 129-x on a given FSS instance 121-x may be configured to control application-level synchronizations performed by the application instances 123-x of the applications 122-x on the given FSS instance 121-x (e.g., instructing the application instances 123-x when to perform application-level synchronization operations). The synchronization managers 129 on the FSS instances 121 may cooperate to coordinate application-level synchronization synchronizations performed by the application instances 123-x of the applications 122-x on the FSS instances 121. The synchronization managers 129 on the FSS instances 121 may cooperate to support activation of active application level data syncing between the application instances 123-x of the applications 122-x on the FSS instances 121. The synchronization managers 129 on the FSS instances 121 may cooperate to support initiation of application level data syncing reconciliation operations between the application instances 123-x of the applications 122-x on the FSS instances 121, for reconciling the sets of data 124-x stored by the application instances 123-x of the applications 122-x on the FSS instances 121. The synchronization managers 129 on the FSS instances 121 may cooperate to support initiation of application level data syncing audit operations between the application instances 123-x of the applications 122-x on the FSS instances 121, for auditing the sets of data 124-x stored by the application instances 123-x of the applications 122-x on the FSS instances 121. It will be appreciated that the synchronization managers 129 may be configured to perform various other functions for controlling application level data synchronizations of the FSS 120.

The FSS 120 may be configured such that the synchronization managers 129 on the FSS instances 121 may cooperate to coordinate application-level synchronization synchronizations performed by the application instances 123-x of the applications 122-x on the FSS instances 121. For example, where an application-level synchronization of the data 124 of the applications 122 is to be performed on the FSS 120: (1) the synchronization manager 129-1 on the first FSS instance 121-1 may instruct each of the application instances 123-x-1 on the first FSS instance 121-1 to initiate application level data synchronization operations with counterpart application instances 123-x-2 on the second FSS instance 121-2 for the data 124-x of the applications 122-x and, in response to receiving indications from each of the application instances 123-x-1 on the first FSS instance 121-1 that the application level data synchronization operations with the counterpart application instances 123-x-2 on the second FSS instance 121-2 have been completed, may inform the synchronization manager 129-2 on the second FSS instance 121-2 that the application level data synchronization operations of the applications 122 have been completed and (2) the synchronization manager 129-2 on the second FSS instance 121-2, upon receipt of the indication from the first synchronization manager 129-1 on the first FSS instance 121-1 that the application level data synchronization operations of the applications 122 have been completed, may instruct each of the application instances 123-x-2 on the second FSS instance 121-2 to initiate application level data reconstruction operations to reconstruct portions of the data 124-x not received from the counterpart application instances 123-x-1 on the first FSS instance 121-1 during the application level data synchronization operations of the applications 122.

The FSS 120 may be deployed for management of the data center 110 using a greenfield deployment scenario (e.g., for introduction of redundant FSS instances or introduction of application level data synchronization to existing FSS instances), such as where the FSS instances 121 are first introduced for managing the data center 110 or where both of the FSS instances 121 are managing the data center 110 and are updated to support application level data syncing. In such greenfield deployment scenarios, the FSS instances 121 may begin using application-level synchronization by first performing a reconciliation operation (in which the FSS instances 121 reconcile data such that each FSS instance 121 has the data necessary to manage the data center 110) and then entering an active syncing mode in which the FSS instances 121 sync data based on application level data syncing. In the reconcile operation, the synchronization managers of the FSS instances 121 may instruct the applications 122 to cooperate to support application-level synching (namely, between the pairs of application instances 123 of the applications 122), the synchronization managers of the FSS instances 121 may communicate to confirm that the applications are cooperating to support application-level syncing, and the synchronization managers of the FSS instances 121 may cooperate to control completion of the reconcile operation such that synchronization of the FSS instances 121 is successfully completed for the FSS 120. In the active syncing mode, the FSS instances 121 sync data based on application level data syncing. It will be appreciated that the FSS 120 may be configured to support various other functions within the context of supporting various greenfield deployment scenarios.

The FSS 120 may be deployed for management of the data center 110 using a brownfield deployment scenario (e.g., for introduction of a redundant FSS instance or introduction of application level data synchronization to existing FSS instances), such as where the first FSS instance 121-1 is managing the data center 110 and the second FSS instance 121-2 is introduced to support redundancy for management of the data center 110 based on application-level data synching or where both of the FSS instances 121 are managing the data center 110 and are updated to support application level data syncing. In such brownfield deployment scenarios, the FSS instances 121 may begin using application-level synchronization by first performing a reconciliation operation (in which the FSS instances 121 reconcile data such that each FSS instance 121 has the data necessary to manage the data center 110) and then entering an active syncing mode in which the FSS instances 121 sync data based on application level data syncing. In the reconcile operation, the synchronization managers of the FSS instances 121 may instruct the applications 122 to cooperate to support application-level synching (namely, between the pairs of application instances 123 of the applications 122), the synchronization managers of the FSS instances 121 may communicate to confirm that the applications are cooperating to support application-level syncing, and the synchronization managers of the FSS instances 121 may cooperate to control completion of the reconcile operation such that synchronization of the FSS instances 121 is successfully completed for the FSS 120. In the active syncing mode, the FSS instances 121 sync data based on application level data syncing. It will be appreciated that the FSS 120 may be configured to support various other functions within the context of supporting various brownfield deployment scenarios.

The FSS 120 may be configured to support audit operations for supporting failovers between FSS instances 121 managing the data center 110. More specifically, the FSS instances 121 may be configured to perform audit operations in conjunction with failovers between the FSS instances 121 for supporting management of the data center 110. For example, if the first FSS instance 123-1 fails while operating as the active instance for management of the data center 110 and the second FSS instance 123-2 switches from being the backup instance to being the active instance for management of the data center 110, the second FSS instance 123-2 may perform an audit to ensure that all data necessary for managing the data center 110 is available to the second FSS instance 121-2 for use in managing the data center 110. The audit may include a determination as to whether all data necessary for managing the data center 110 is available to the second FSS instance 121-2 for use in managing the data center 110 and, based on a determination that some set of data necessary for managing the data center 110 is not available to the second FSS instance 121-2 for use in managing the data center 110, reconstruction of that set of data necessary for managing the data center 110 by the second FSS instance 121-2. It will be appreciated that the FSS 120 may be configured to support various other functions within the context of audit operations. It will be appreciated that the FSS 120 may be configured to execute audit operations under various other conditions (e.g., periodically to ensure periodic improvement of readiness to support failover, in response to detection of conditions which may be precursors to failovers, or the like, as well as various combinations thereof).

It will be appreciated that the FSS 120 may be configured to support various other functions for supporting application-level synchronization of data (including for performing application-level synchronization of data, controlling application-level synchronization of data, reconciling and auditing application-level synchronization of data, or the like, as well as various combinations thereof.

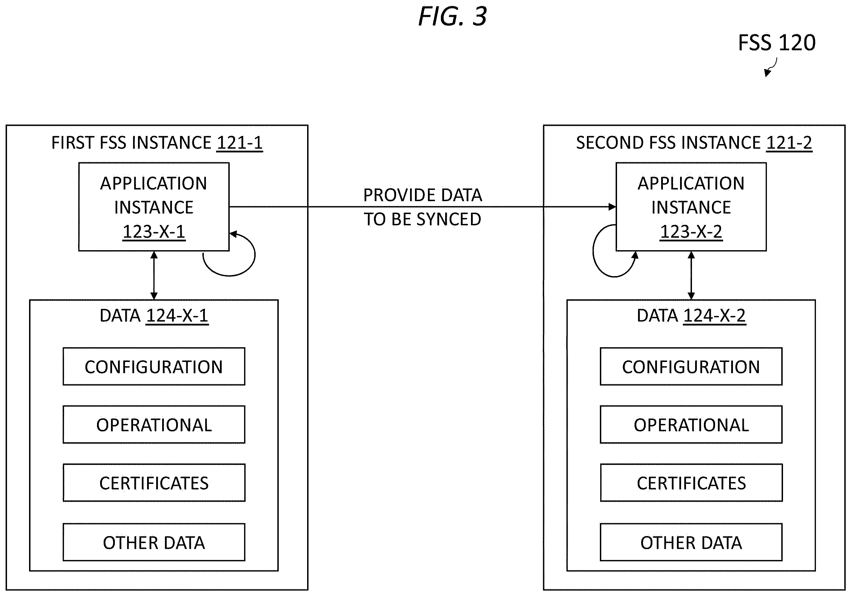

FIG. 3 depicts an example embodiment for performing application-level synchronization of data between fabric services system instances of a fabric services system.

In FIG. 3, a portion of the FSS 120 of FIG. 2 is depicted, with the data center 110 of FIG. 1 being omitted for purposes of clarity. As depicted in FIG. 3, the FSS 120 includes a first FSS instance 121-1 and a second FSS instance 121-2. In the example of FIG. 3, the first FSS instance 121-1 is operating in the role of the active FSS instance of the FSS 120 and the second FSS instance 121-2 is operating in the role of the backup FSS instance of the FSS 120. The FSS instances 121 are configured to support application level data synchronization for applications of the FSS 120; however, for clarity in presenting aspects of application level data synchronization at the application level, only a single application is represented by depiction of the pair of application instances including the application instance 123-x-1 on the first FSS instance 121-1 and the application instance 123-x-2 on the second FSS instance 121-2. In FIG. 3, the application instances 123-x of the application 122-x perform an application level data synchronization. The application level data synchronization may be performed as part of an initial synchronization, active synchronization, reconciliation, auditing, or the like. The application level data synchronization may be triggered under the control of the synchronization manager of the first FSS instance 121-1 (which is omitted for purposes of clarity).

In FIG. 3, the FSS 120 is configured such that the first FSS instance 121-1 operating as the active FSS instance of the FSS 120 and the second FSS instance 121-2 operating as the backup FSS instance of the FSS 120 cooperate to ensure that the data 124-x-1 available to the first FSS instance 121-1 operating as the active FSS instance of the FSS 120 and the data 124-x-2 available to the second FSS instance 121-2 operating as the backup FSS instance of the FSS 120 are substantially similar such that either of the FSS instances 121 can operate as the active FSS instance of the FSS 120 as needed. The first FSS instance 121-1 operating as the active FSS instance selects portions of the data 124-x-1 to be synchronized and portions of the data 124-x-1 that are not to be synchronized based on a determination by the first FSS instance 121-1 operating as the active FSS instance that the second FSS instance 121-2 operating as the backup FSS instance will be able to reconstruct that data locally such that it does not need to be synchronized. The first FSS instance 121-1 operating as the active FSS instance provides the data to be synchronized to the second FSS instance 121-2 operating as the backup FSS instance and the second FSS instance 121-2 operating as the backup FSS instance receives the synchronized data and stores the synchronized data as part of the data 124-x-2. The second FSS instance 121-2 operating as the backup FSS instance receives the synchronized data from the first FSS instance 121-1 operating as the active FSS instance, determines missing data that is not synchronized by the first FSS instance 121-1 operating as the active FSS instance and that is needed by the second FSS instance 121-2 operating as the backup FSS instance, reconstructs the missing data that is not synchronized by the first FSS instance 121-1 operating as the active FSS instance and that is needed by the second FSS instance 121-2 operating as the backup FSS instance to form reconstructed data, and stores the reconstructed data as part of the data 124-x-2. In this manner, the data 124-x-1 available to the first FSS instance 121-1 operating as the active FSS instance and the data 124-x-2 available to the second FSS instance 121-2 operating as the backup FSS instance are substantially similar such that either of the FSS instances 121 can operate as the active FSS instance of the FSS 120 as needed.

It will be appreciated that the application-level synchronization of data between the FSS instances 121 of the FSS 120 may be further understood by considering the following specific examples which illustrate specific examples of data that is synchronized between the application instance 123-x-1 and the application instance 123-x-2 (i.e., data that is provided from the application instance 123-x-1 to the application instance 123-x-2) and specific examples of data that is not synchronized between the application instance 123-x-1 and the application instance 123-x-2 (i.e., data that is not provided from the application instance 123-x-1 to the application instance 123-x-2 and, thus, which is reconstructed by the application instance 123-x-2 locally such that the application instance 123-x-2 has the full set of data needed by the application instance 123-x-2 to switch from operating in the backup role to operating in the active role when the application instance 123-x-1 experiences a problem).

For example, where the application instances 123-x are instances of an intent manager application configured to support intent management functions, application-level synchronization of data from the application instance 123-x-1 operating in the active role to the application instance 123-x-1 operating in the backup role may be performed as follows. For example, the following types of data may be provided from the application instance 123-x-1 operating in the active role to the application instance 123-x-2 operating in the backup role: cfgOverride, cfgOverrideVer, Cumulative_accepted_watch, deployData, downlinks, fabricData, fabricLink, fabricLinks, fabricNode, fabricNodeInitialCfg, fsp_intentmgr_ipam, fsp _intentmgr_pool_asn, fsp_intentmgr_pool_isl, fsp_intentmgr_pool_mgmt, fsp_intentmgr_pool_router, globalData, intentData, intentData_events, intentDeployment, intentNodeDeployment, intentSummary, intent _deployedMirrorData, intent_interfaces, intent_mergedMirrorData, intent_mirrors, intent_mirrorsDst, intent_mirrorsSrc,labels, lags, maintConfigBlockNode, mergedConfigNode, nodeCfgOverride, objectToLabelsAssociation, profileData, regions, intentmgr_nodeoverride. For example, the following types of data may not be provided from the application instance 123-x-1 operating in the active role to the application instance 123-x-2 operating in the backup role (and, thus, may need to be reconstructed locally at the application instance 123-x-2 operating in the backup role): currCandFabricNode, fabricNodeActualConfig, mirrorCfgNotifsWithAdds, intent_newMirrorData, templateProfileData, wlConfigBlockNode, New_watch_cnt, New_watch, Accept_watch, Reject_watch, accepted_watch, Translated_cumulative_accepted_watch. It will be appreciated that the foregoing are only examples and, thus, that the application instances 123-x may decide between types of data to be synchronized and types of data not to be synchronized in various other ways.

For example, where the application instances 123-x are instances of a topology manager application configured to support topology management functions, application-level synchronization of data from the application instance 123-x-1 operating in the active role to the application instance 123-x-1 operating in the backup role may be performed as follows. For example, here, the decision as to whether to sync configuration data from the application instance 123-x-1 operating in the active role to the application instance 123-x-2 operating in the backup role or whether to skip (or prevent) syncing of configuration data from the application instance 123-x-1 operating in the active role to the application instance 123-x-2 operating in the backup role may be based on a field included within the records in the database storing configuration data (e.g., for graph-sync-fss-topomgr, the decision as to whether to sync or skip is performed at the record level based on the field "params.sync"). For example, here, the application instance 123-x-1 operating in the active role may decide not to sync operational data to the application instance 123-x-2 operating in the backup role (e.g., a decision not to sync operational data such as kafka-topic-meta-<svcname>, transaction-meta-<svcname>, dhcpconfig, alarms, and so forth). It will be appreciated that the foregoing are only examples and, thus, that the application instances 123-x may decide between types of data to be synchronized and types of data not to be synchronized in various other ways.

For example, where the application instances 123-x are instances of an operational topology manager application configured to support operational topology management functions, application-level synchronization of data from the application instance 123-x-1 operating in the active role to the application instance 123-x-1 operating in the backup role may be performed as follows. For example, here, the decision as to whether to sync operational data from the application instance 123-x-1 operating in the active role to the application instance 123-x-2 operating in the backup role or whether to skip (or prevent) syncing of operational data from the application instance 123-x-1 operating in the active role to the application instance 123-x-2 operating in the backup role may be based on an attribute (e.g., for a collection by name "oper-lldp-edge-neighbor", an attribute "data.isAPIOverride" is used to decide whether to sync the record or skip syncing of the record). It will be appreciated that the foregoing are only examples and, thus, that the application instances 123-x may decide between types of data to be synchronized and types of data not to be synchronized in various other ways.

It will be appreciated that the foregoing are only examples and, thus, that the application instances 123-x may decide between types of data to be synchronized and types of data not to be synchronized in various other ways depending on various factors or combinations of factors (e.g., application types, management functions supported, data types available, database types being used, databases being used, or the like, as well as various combinations thereof).

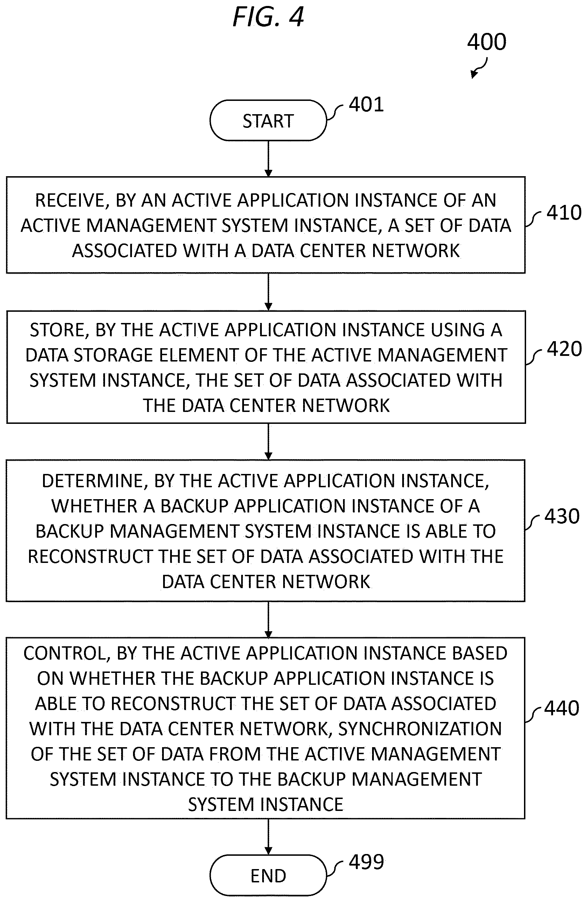

It will be appreciated that various aspects of performing application-level synchronization of data between active and backup application instances 123 of active and backup FSS instances 121, respectively, may be further understood by considering the various example embodiments presented with respect to FIGs. 4-5.

FIG. 4 depicts an example embodiment of a method for use by an active application instance of an active management system instance to support application-level synchronization of data with a backup application instance of a backup management system instance. It will be appreciated that, although primarily presented herein as being performed serially, at least a portion of the functions of the method 400 may be performed contemporaneously or in a different order than as presented with respect to FIG. 4. At block 401, the method 400 begins. At block 410, receive, by an active application instance of an active management system instance, a set of data associated with a data center network. At block 420, store, by the active application instance using a data storage element of the active management system instance, the set of data associated with the data center network. At block 430, determine, by the active application instance, whether a backup application instance of a backup management system instance is able to reconstruct the set of data associated with the data center network. At block 440, control, by the active application instance based on whether the backup application instance is able to reconstruct the set of data associated with the data center network, synchronization of the set of data from the active management system instance to the backup management system instance. At block 499, the method 400 ends. The method 400 may further include the feature that the determination as to whether the backup application instance is able to reconstruct the set of data associated with the data center network is based on at least one management function common to the active application instance and the backup application instance. The method 400 may further include the feature that the determination as to whether the backup application instance is able to reconstruct the set of data associated with the data center network is based on at least one of a data type of data in the set of data of the data center network or an attribute of data in the set of data of the data center network. The method 400 may further include the feature that the determination as to whether the backup application instance is able to reconstruct the set of data associated with the data center network is based on a database type of a database in which the active application instance stores the set of data of the data center network. The method 400 may further include, to control synchronization of the set of data from the active management system instance to the backup management system instance, the feature of send, by the active application instance toward the backup application instance based on a determination that the set of data associated with the data center network cannot be reconstructed by the backup application instance, the set of data. The method 400 may further include, to control synchronization of the set of data from the active management system instance to the backup management system instance, the feature of send, by the active application instance toward the backup application instance based on a determination that a first portion of data from the set of data associated with the data center network can be reconstructed by the backup application instance and a second portion of data from the set of data associated with the data center network cannot be reconstructed by the backup application instance, only the second portion of data from the set of data associated with the data center network. The method 400 may further include, to control synchronization of the set of data from the active management system instance to the backup management system instance, the feature of perform, by the active application instance, synchronization of the set of data from the active management system instance to the backup management system instance based on at least one of a collection-level synchronization, a table-level synchronization, or a row-level synchronization. The method 400 may further include, to control synchronization of the set of data from the active management system instance to the backup management system instance, the features of receive, by the active application instance from a synchronization manager of the active management system instance, a request to perform a data synchronization operation with the backup application instance and provide, by the active application instance toward the synchronization manager, an indication that the data synchronization operation with the backup application instance has been completed. The method 400 may further include the feature that the synchronization of the set of data from the active management system instance to the backup management system instance includes at least one of a heterogeneous data transfer, a database agnostic data transfer, a collection-level data transfer, a table-level data transfer, a row-level data transfer, or an attribute-based data transfer. It will be appreciated that various other functions described within the context of FIG. 1, FIG. 2, and FIG. 3 as being supported by an active application instance of an active management system instance may be incorporated within the context of the method 400 of FIG. 4.

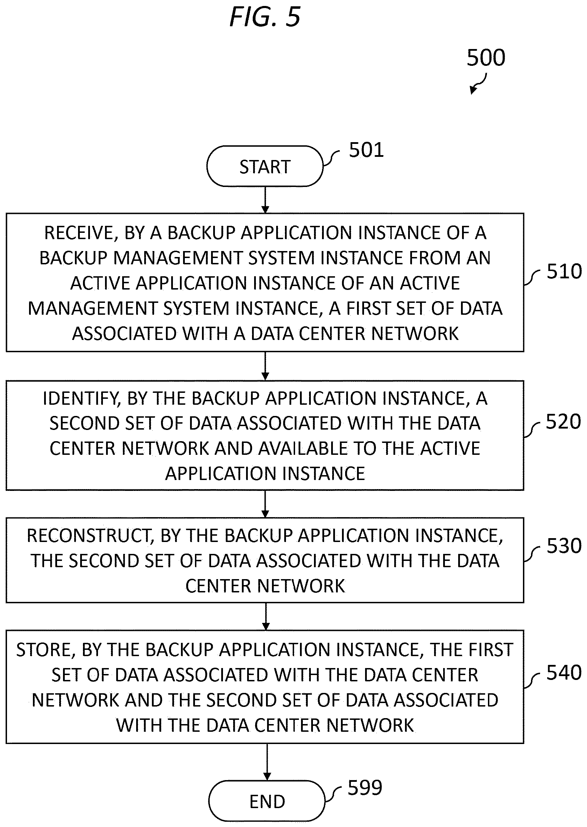

FIG. 5 depicts an example embodiment of a method for use by a backup application instance of a backup management system instance to support application-level synchronization of data with an active application instance of an active management system instance. It will be appreciated that, although primarily presented herein as being performed serially, at least a portion of the functions of the method 500 may be performed contemporaneously or in a different order than as presented with respect to FIG. 5. At block 501, the method 500 begins. At block 510, receive, by a backup application instance of a backup management system instance from an active application instance of an active management system instance, a first set of data associated with a data center network. At block 520, identify, by the backup application instance, a second set of data associated with the data center network and available to the active application instance. At block 530, reconstruct, by the backup application instance, the second set of data associated with the data center network. At block 540, store, by the backup application instance, the first set of data associated with the data center network and the second set of data associated with the data center network. At block 599, the method 500 ends. The method 500 may further include that the receipt of the first set of data associated with the data center network is based on at least one of a heterogeneous data transfer, a database agnostic data transfer, a collection-level data transfer, a table-level data transfer, a row-level data transfer, or an attribute-based data transfer. The method 500 may further include that the identification of the second set of data associated with the data center network is based on at least one management function common to the active application instance and the backup application instance. The method 500 may further include that the identification of the second set of data associated with the data center network is based on at least one of a data type of data in the first set of data of the data center network or an attribute of data in the first set of data of the data center network. The method 500 may further include that the identification of the second set of data associated with the data center network is based on a database type of a database in which the backup application instance stores the first set of data of the data center network. The method 500 may further include that the second set of data associated with the data center network is reconstructed based on at least a portion of the first set of data associated with the data center network. The method 500 may further include the features of receive, by the backup application instance from the active application instance, a request to perform a data synchronization operation with the active application instance and provide, by the backup application instance toward the active application instance, an indication that the data synchronization operation with the active application instance has been completed. The method 500 may further include the features of receive, by the backup application instance from a backup synchronization manager of the backup management system instance, a request to perform a data synchronization operation with the active application instance and provide, by the backup application instance toward the backup synchronization manager, an indication that the data synchronization operation with the active application instance has been completed. The method 500 may further include the feature of perform, by the backup management system instance based on a request for the backup management system instance to take over responsibility for management of the data center network, management of the data center network based on the first set of data and the second set of data. It will be appreciated that various other functions described within the context of FIG. 1, FIG. 2, and FIG. 3 as being supported by a backup application instance of a backup management system instance may be incorporated within the context of the method 500 of FIG. 5.

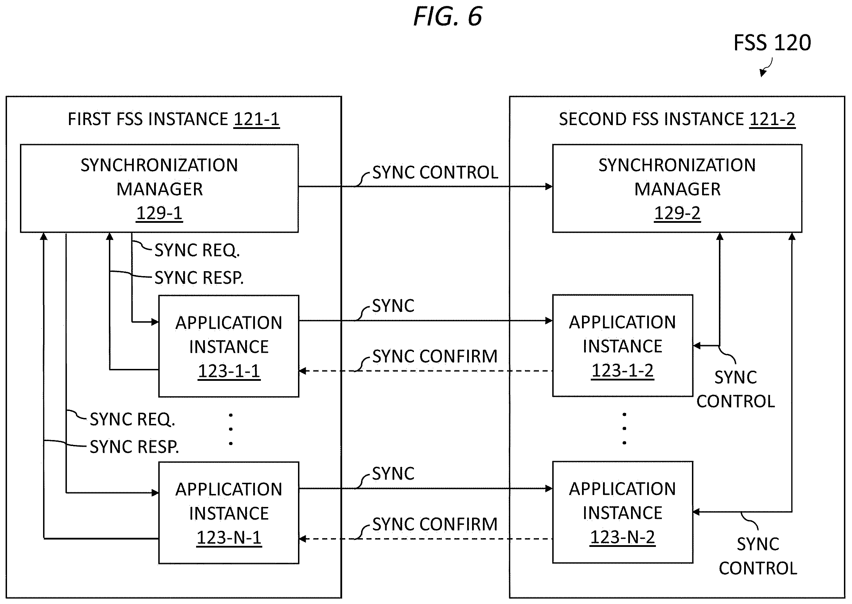

FIG. 6 depicts an example embodiment for controlling application-level synchronization of data between fabric services system instances of a fabric services system.

In FIG. 6, a portion of the FSS 120 of FIG. 1 and FIG. 2 is depicted, with the data center 110 of FIG. 1 being omitted for purposes of clarity. As depicted in FIG. 6, the FSS 120 includes a first FSS instance 121-1 and a second FSS instance 121-2. In the example of FIG. 6, the first FSS instance 121-1 is operating in the role of the active FSS instance of the FSS 120 and the second FSS instance 121-2 is operating in the role of the backup FSS instance of the FSS 120. The FSS instances 121 support a set of applications 122 in the form of a set of pairs of application instances 123 including the application instances 123-x-1 on the first FSS instance 121-1 and the application instances 123-x-2 on the second FSS instance 121-2 (e.g., application instances 123-1-1 and 123-1-2 each support management functions of the application 122-1, application instances 123-2-1 and 123-2-2 each support management functions of the application 122-2, and so forth, with application instances 123-N-1 and 123-N-2 each support management functions of the application 122-N). The FSS instances 121 are configured to support control over application level data synchronization for the applications 122 of the FSS 120 based on the synchronization managers 129, including the synchronization manager 129-1 on the first FSS instance 121-1 and the synchronization manager 129-2 on the second FSS instance 121-2, which cooperate to control application level data synchronization for the applications 122 of the FSS 120 by controlling application level data synchronizations between the application instances 123-x-1 and 123-x-2 in the pairs of application instances 123 of the applications 122, respectively.

In FIG. 6, as indicated above, the FSS instances 121 are configured to support control over application level data synchronization for the applications 122 of the FSS 120. The synchronization manager 129-1 on the first FSS instance 121-1, based on a determination to initiate a synchronization operation, sends synchronization requests to the application instances 123-x-1 on the first FSS instance 123-x-1, requesting that the application instances 123-x-1 on the first FSS instance 123-x-1 perform application level data synchronizations with the application instances 123-x-2 on the second FSS instance 121-2. The application instances 123-x-1 on the first FSS instance 123-x-1 receive the synchronization requests and independently perform application-level synchronizations with the application instances 123-x-2 on the second FSS instance 121-2, respectively, e.g., each application instance 123-x-1 determines data to be synchronized and data not to be synchronized (since that portion of the data can be reconstructed by the corresponding application instance 123-x-2) and provides the data to be synchronized to the corresponding application instance 123-x-2). The application instances 123-x-2 may (e.g., in the case of synchronous data synchronization) or may not (e.g., in the case of asynchronous data synchronization) send synchronization responses back to the application instances 123-x-1; however, in any event, each application instance 123-x-1, based on a determination that the application level data synchronization with the corresponding application instance 123-x-2 for the application 122-x is completed, informs the synchronization manager 129-1 by sending a synchronization response to the synchronization manager 129-1. The synchronization manager 129-1, after receiving indications from each of the application instances 123-x-1 that the application level data synchronization operations with the corresponding application instances 123-x-2 for the application 122-x are complete, sends a synchronization complete notification to the synchronization manager 129-2 of the second FSS instance 121-2. The synchronization manager 129-2 of the second FSS instance 121-2 receives the synchronization complete notification from the synchronization manager 129-1 of the first FSS instance 121-1 and may interact with the application instances 123-x-2 to cause the application instances 123-x-2 to perform additional application level data synchronization functions (e.g., trigger reconstruction of portions of application level data not provided by the application instances 123-x-1 of the first FSS instance 121-1). It will be appreciated that the synchronization managers 129 of the FSS instances 120 may cooperate in various other ways to support data synchronization enabling the FSS 120 to support redundant management of the data center 110.

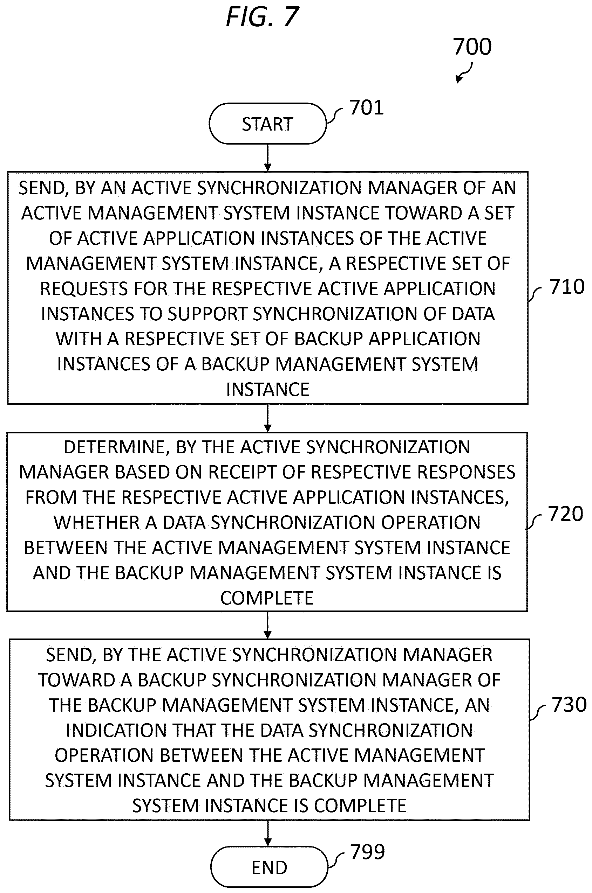

It will be appreciated that various aspects of controlling application-level synchronization of data between active and backup application instances 123 of active and backup FSS instances 121, respectively, may be further understood by considering the various example embodiments presented with respect to FIGs. 7-10.

FIG. 7 depicts an example embodiment of a method for use by an active synchronization manager of an active management system instance to support control over application-level synchronization of data between an active application instance of the active management system instance and a backup application instance of a backup management system instance. It will be appreciated that, although primarily presented herein as being performed serially, at least a portion of the functions of the method 700 may be performed contemporaneously or in a different order than as presented with respect to FIG. 7. At block 701, the method 700 begins. At block 710, send, by an active synchronization manager of an active management system instance toward a set of active application instances of the active management system instance, a respective set of requests for the respective active application instances to support synchronization of data with a respective set of backup application instances of a backup management system instance. At block 720, determine, by the active synchronization manager based on receipt of respective responses from the respective active application instances, whether a data synchronization operation between the active management system instance and the backup management system instance is complete. At block 730, send, by the active synchronization manager toward a backup synchronization manager of the backup management system instance, an indication that the data synchronization operation between the active management system instance and the backup management system instance is complete. At block 799, the method 700 ends. The method 700 may include the feature that the respective requests for the respective active application instances to support synchronization of data with the respective backup application instances are configured to cause the respective active application instances to perform application-level synchronization of data with the respective backup application instances. The method 700 may include the feature that, for at least one of the responses from the respective active application instances, the respective response for the respective active application instance is indicative that the respective active application instance received, from the respective backup application instance, a respective acknowledgment indicative that the respective application-level synchronization between the respective active application instance and the respective backup application instance has been completed. The method 700 may include the feature that, for at least one of the responses from the respective active application instances, the respective response for the respective active application instance is indicative that the respective active application instance received, from the respective backup application instance, a respective acknowledgment indicative that the respective active application instance has forwarded a subset of data, which is not capable of being reconstructed by the respective backup application instance, toward the respective backup application instance. The method 700 may include the feature of receive, by the active synchronization manager from the backup synchronization manager, an indication that the backup synchronization manager has verified that the data synchronization operation between the active management system instance and the backup management system instance is complete. It will be appreciated that various other functions described within the context of FIG. 1, FIG. 2, and FIG. 6 as being supported by an active synchronization manager of an active management system instance may be incorporated within the context of the method 700 of FIG. 7.

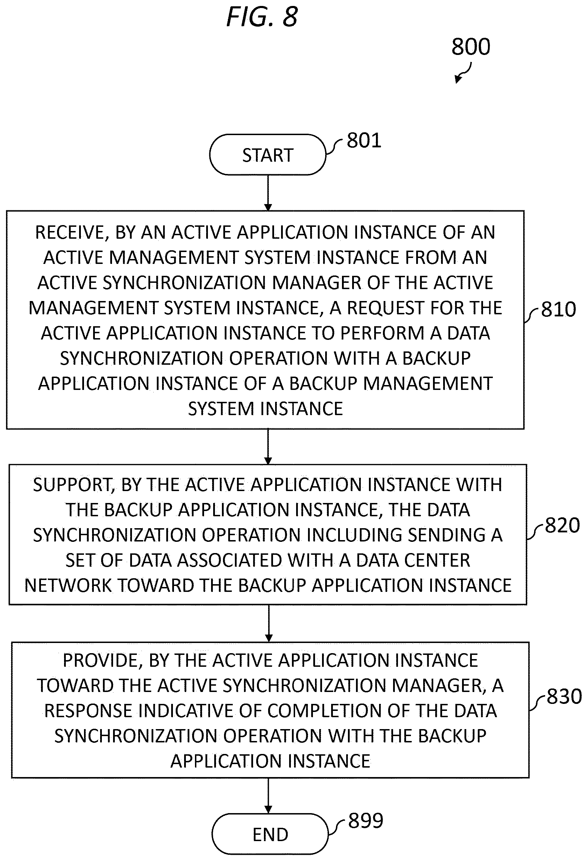

FIG. 8 depicts an example embodiment of a method for use by an active application instance of an active management system instance to support control over application-level synchronization of data between the active management system instance and a backup management system instance. It will be appreciated that, although primarily presented herein as being performed serially, at least a portion of the functions of the method 800 may be performed contemporaneously or in a different order than as presented with respect to FIG. 8. At block 801, the method 800 begins. At block 810, receive, by an active application instance of an active management system instance from an active synchronization manager of the active management system instance, a request for the active application instance to perform a data synchronization operation with a backup application instance of a backup management system instance. At block 820, support, by the active application instance with the backup application instance, the data synchronization operation including sending a set of data associated with a data center network toward the backup application instance. At block 830, provide, by the active application instance toward the active synchronization manager, a response indicative of completion of the data synchronization operation with the backup application instance. At block 899, the method 800 ends. The method 800 may include the feature that the active application instance provides the response indicative of completion of the data synchronization operation toward the active synchronization manager based on sending, by the active application instance toward the backup application instance, of the set of data associated with the data center network. The method 800 may include the feature that the active application instance provides the response indicative of completion of the data synchronization operation toward the active synchronization manager based on receipt, by the active application instance from the backup application instance, of an indication of completion of the data synchronization operation on the backup application instance. The method 800 may include the feature that the data synchronization operation includes at least one of a heterogeneous data transfer, a database agnostic data transfer, a collection-level data transfer, a table-level data transfer, a row-level data transfer, or an attribute-based data transfer. The method 800 may include the feature that the set of data associated with the data center network comprises data unable to be reconstructed by the backup application instance. It will be appreciated that various other functions described within the context of FIG. 1, FIG. 2, and FIG. 6 as being supported by an active application instance of an active management system instance may be incorporated within the context of the method 800 of FIG. 8.

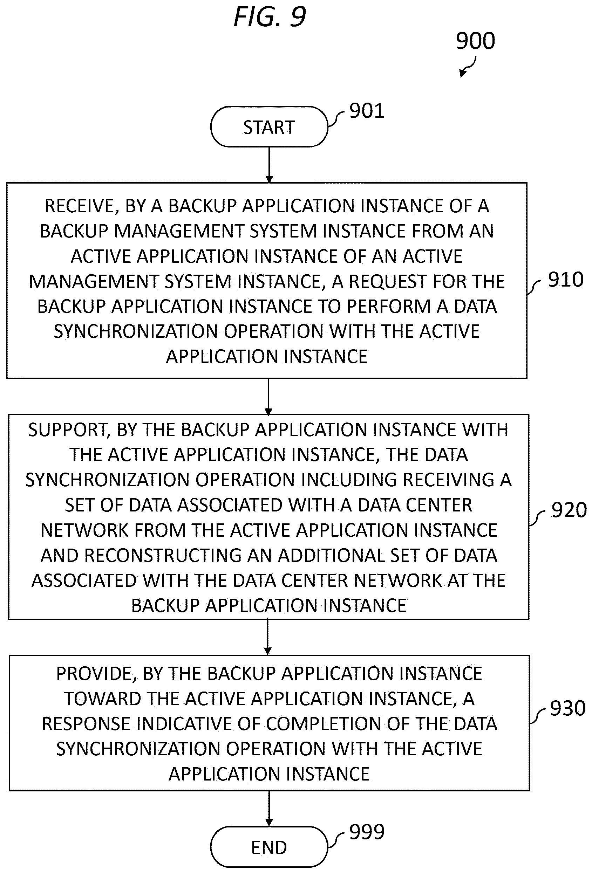

FIG. 9 depicts an example embodiment of a method for use by a backup application instance of a backup management system instance to support control over application-level synchronization of data between the backup management system instance and an active management system instance. It will be appreciated that, although primarily presented herein as being performed serially, at least a portion of the functions of the method 900 may be performed contemporaneously or in a different order than as presented with respect to FIG. 9. At block 901, the method 900 begins. At block 910, receive, by a backup application instance of a backup management system instance from an active application instance of an active management system instance, a request for the backup application instance to perform a data synchronization operation with the active application instance. At block 920, support, by the backup application instance with the active application instance, the data synchronization operation including receiving a set of data associated with a data center network from the active application instance and reconstructing an additional set of data associated with the data center network at the backup application instance. At block 930, provide, by the backup application instance toward the active application instance, a response indicative of completion of the data synchronization operation with the active application instance. At block 999, the method 900 ends. The method 900 may include the feature that the data synchronization operation includes at least one of a heterogeneous data transfer, a database agnostic data transfer, a collection-level data transfer, a table-level data transfer, a row-level data transfer, or an attribute-based data transfer. The method 900 may include the feature that the set of data associated with the data center network includes data unable to be reconstructed by the backup application instance. The method 900 may include the feature that the response indicative of completion of the data synchronization operation with the active application instance is provided based on a determination that the backup application instance reconstructed the additional set of data associated with the data center network. The method 900 may include the feature of provide, by the backup application instance toward a backup synchronization manager of the backup management system instance, a response indicative of completion of the data synchronization operation with the active application instance. It will be appreciated that various other functions described within the context of FIG. 1, FIG. 2, and FIG. 6 as being supported by a backup application instance of a backup management system instance may be incorporated within the context of the method 900 of FIG. 9.

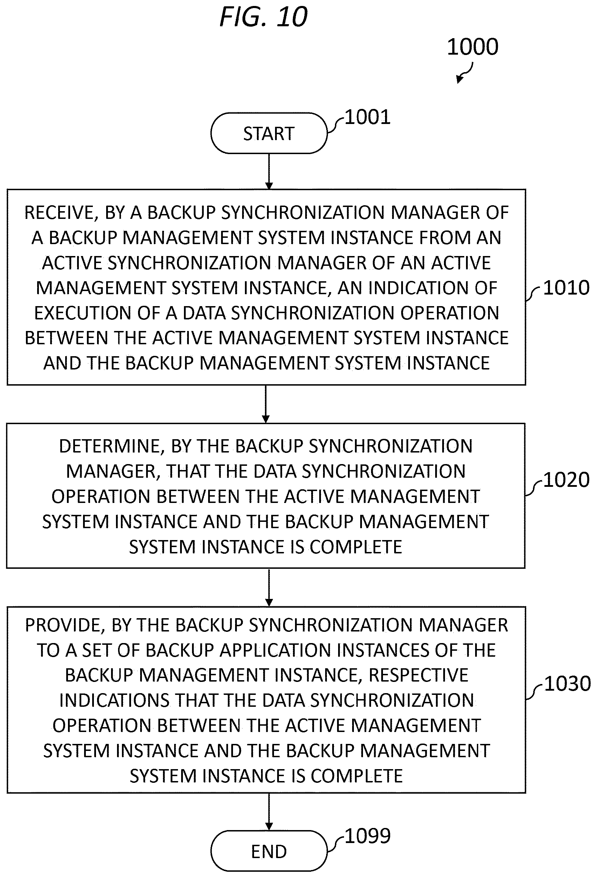

FIG. 10 depicts an example embodiment of a method for use by a backup synchronization manager of a backup management system instance to support control over application-level synchronization of data between a backup application instance of the backup management system instance and an active application instance of an active management system instance. It will be appreciated that, although primarily presented herein as being performed serially, at least a portion of the functions of the method 1000 may be performed contemporaneously or in a different order than as presented with respect to FIG. 10. At block 1001, the method 1000 begins. At block 1010, receive, by a backup synchronization manager of a backup management system instance from an active synchronization manager of an active management system instance, an indication of execution of a data synchronization operation between the active management system instance and the backup management system instance. At block 1020, determine, by the backup synchronization manager, that the data synchronization operation between the active management system instance and the backup management system instance is complete. At block 1030, provide, by the backup synchronization manager to a set of backup application instances of the backup management instance, respective indications that the data synchronization operation between the active management system instance and the backup management system instance is complete. At block 1099, the method 1000 ends. The method 1000 may include the feature that the data synchronization operation between the active management system instance and the backup management system instance includes a set of parallel application-level synchronization operations between active application instances on the active management system instance and backup application instances on the backup management system instance. The method 1000 may include the feature that the parallel application-level synchronization operations are synchronous operations, and the determination that the data synchronization operation between the active management system instance and the backup management system instance is complete is based on the indication of execution of the data synchronization operation between the active management system instance and the backup management system instance. The method 1000 may include the feature that the parallel application-level synchronization operations are asynchronous operations, and the determination that the data synchronization operation between the active management system instance and the backup management system instance is complete is based on receipt of indications, from the respective backup application instances, that the respective parallel application-level synchronization operations are completed. The method 1000 may include the feature that the data synchronization operation includes at least one of a heterogeneous data transfer, a database agnostic data transfer, a collection-level data transfer, a table-level data transfer, a row-level data transfer, or an attribute-based data transfer. It will be appreciated that various other functions described within the context of FIG. 1, FIG. 2, and FIG. 6 as being supported by a backup synchronization manager of a backup management system instance may be incorporated within the context of the method 1000 of FIG. 10.

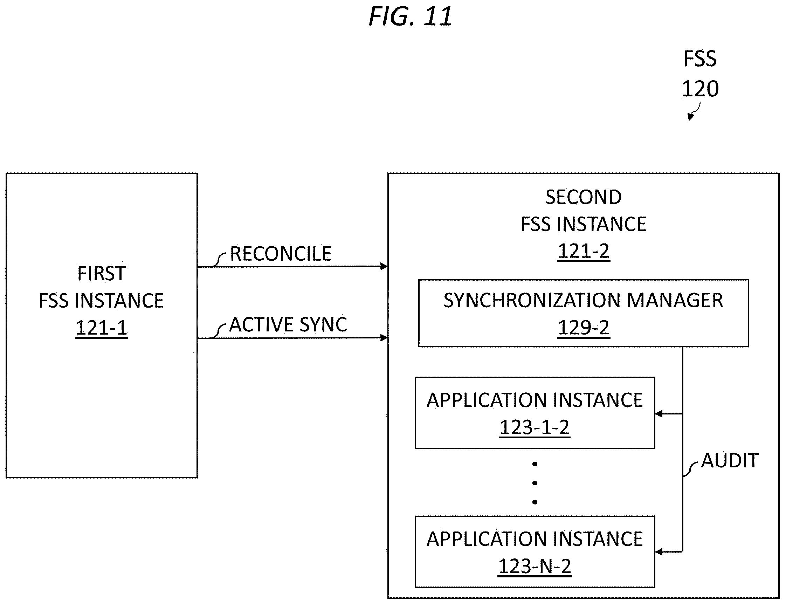

FIG. 11 depicts an example embodiment for reconciling and auditing application-level synchronization of data between fabric services system instances of a fabric services system.

In FIG. 11, the FSS 120 includes a first FSS instance 121-1 and a second FSS instance 121-2. In the example of FIG. 11, the first FSS instance 121-1 is operating in the role of the active FSS instance of the FSS 120 and the second FSS instance 121-2 is operating in the role of the backup FSS instance of the FSS 120. The FSS instances 121 support a set of applications 122 in the form of a set of pairs of application instances 123 including the application instances 123-x-1 on the first FSS instance 121-1 (which are omitted for purposes of clarity) and the application instances 123-x-2 on the second FSS instance 121-2. The FSS instances 121 are configured to support reconciliation and auditing of application level data synchronization for the applications 122 of the FSS 120, active data synching for application level data synchronization for the applications 122, and auditing of application level data synchronization for the applications 122 of the FSS 120. It will be appreciated that the reconciliation and audit functions may be performed in various contexts, such as during deployment scenarios (e.g., deployment of a redundant FSS instance 121, deployment of application level data synchronization capabilities to one or more FSS instances 121, or the like, as well as various combinations thereof), in response to one or more conditions or events (e.g., at a time of failover from one of the FSS instances 121 to the other of the FSS instances 121, such as where the first FSS instance 121-1 is operating as the active FSS instance and fails and the second FSS instance 121-2 operating as the backup FSS instance takes over as the active FSS instance), or the like, as well as various combinations thereof.

In FIG. 11, as indicated above, the FSS instances 121 are configured to support reconciliation and auditing of application level data synchronization for the applications 122 of the FSS 120, active data synching for application level data synchronization for the applications 122, and auditing of application level data synchronization for the applications 122 of the FSS 120. The FSS instances 121 are configured to support reconciliation of application level data synchronization for the applications 122 of the FSS 120, which may trigger application level data synchronizations for some or all of the applications 122-x (e.g., in the manner presented in FIG. 3 and FIG. 6). The FSS instances 121 are configured to support an active synchronization mode in which the pairs of application instances 123 of the applications 122 actively perform data synchronization operations (e.g., in the manner presented in FIG. 3). The FSS instances 121 are configured to support auditing of application level data synchronization for the applications 122 of the FSS 120, which may trigger application level data audits on the second FSS instance 121-2 operating as the backup FSS instance for some or all of the applications 122-x (e.g., where the synchronization manager 129-2 sends audit commands to cause the application instances 123-x-2 on the second FSS instance 121-2 to audit the data 124-x-2 of the application instances 123-x-2 to determine whether the data 124-x-2 of the application instances 123-x-2 is sufficient such that the second FSS 121-2 can take over the role of the active FSS instance in the event that the first FSS instance 121-1 operating as the active FSS instance experiences a problem). It will be appreciated that the results of the auditing may trigger local generation of application level data by the application instances 123-x-2 of the second FSS instance 121-2, reconciliation of application level data synchronization for the applications 122 of the FSS 120, or the like, as well as various combinations thereof.

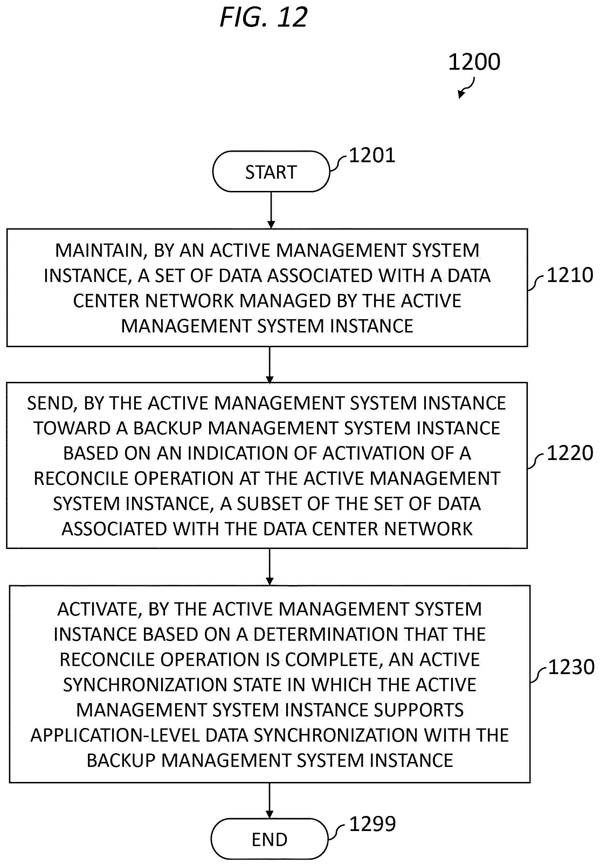

It will be appreciated that various aspects of reconciling and auditing application-level synchronization of data between active and backup application instances 123 of active and backup FSS instances 121, respectively, may be further understood by considering the various example embodiments presented with respect to FIGs. 12-13.

FIG. 12 depicts an example embodiment of a method for use by an active management system instance for supporting reconciling and auditing of application-level synchronization of data between the active management system instance and a backup management system instance. It will be appreciated that, although primarily presented herein as being performed serially, at least a portion of the functions of the method 1200 may be performed contemporaneously or in a different order than as presented with respect to FIG. 12. At block 1201, the method 1200 begins. At block 1210, maintain, by an active management system instance, a set of data associated with a data center network managed by the active management system instance. At block 1220, send, by the active management system instance toward a backup management system instance based on an indication of activation of a reconcile operation at the active management system instance, a subset of the set of data associated with the data center network. At block 1230, activate, by the active management system instance based on a determination that the reconcile operation is complete, an active synchronization state in which the active management system instance supports application-level data synchronization with the backup management system instance. At block 1299, the method 1200 ends. The method 1200 may include the feature that the set of data associated with the data center network comprises at least one of configuration data, operational data, or files. The method 1200 may include the feature that the reconcile operation includes at least one of a data synchronization operation performed at a database collection level, a data synchronization operation performed at a database table level, or a data synchronization operation performed at a database row level. The method 1200 may include the feature that the active management system instance includes a set of active application instances, and the activation of the reconcile operation at the active management system instance causes an active synchronization manager of the active management system instance to request that the active application instances perform respective application-level reconciliation operations with respective backup application instances of the backup management system instance. The method 1200 may include the feature that the application-level data synchronization with the backup management system instance includes at least one of a heterogeneous data transfer, a database agnostic data transfer, a collection-level data transfer, a table-level data transfer, a row-level data transfer, or an attribute-based data transfer. The method 1200 may include the feature that the active management system instance includes a set of active application instances, wherein, for each of the active application instances, application-level data synchronization with the backup management system instance includes application-level data synchronization by the respective active application instance with a respect backup application instance of the backup management system instance. The method 1200 may include the feature that the application-level data synchronization by the respective active application instance with the respect backup application instance of the backup management system instance includes sending, by the respective active application instance toward the respective backup application instance, a subset of data of the active application instance determined by the respective active application instance as being unable to be reconstructed by the respective backup application instance. The method 1200 may include the feature that the active management system instance includes a set of active application instances and an active synchronization manager, and the active synchronization state is activated based on a determination by the active synchronization manager that the active application instances have completed respective application-level data synchronization with respective backup application instances of the backup management system instance. The method 1200 may include the feature that a state of an active application instance of the active management system instance is controlled based on the active synchronization state. It will be appreciated that various other functions described within the context of FIG. 1, FIG. 2, and FIG. 11 as being supported by an active management system instance may be incorporated within the context of the method 1200 of FIG. 12.

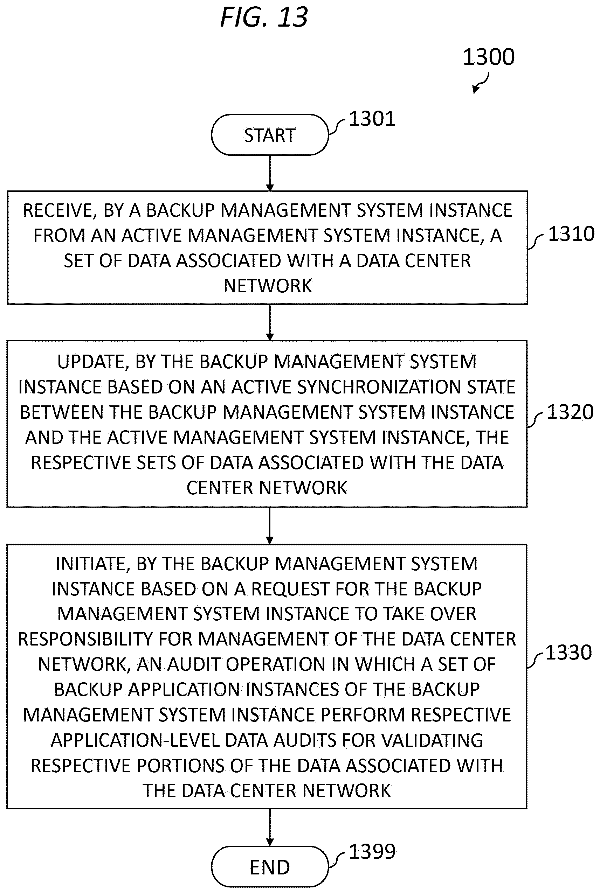

FIG. 13 depicts an example embodiment of a method for use by a backup management system instance for supporting reconciling and auditing of application-level synchronization of data between the backup management system instance and an active management system instance. It will be appreciated that, although primarily presented herein as being performed serially, at least a portion of the functions of the method 1300 may be performed contemporaneously or in a different order than as presented with respect to FIG. 13. At block 1301, the method 1300 begins. At block 1310, receive, by a backup management system instance from an active management system instance, a set of data associated with a data center network. At block 1320, update, by the backup management system instance based on an active synchronization state between the backup management system instance and the active management system instance, the respective sets of data associated with the data center network. At block 1330, initiate, by the backup management system instance based on a request for the backup management system instance to take over responsibility for management of the data center network, an audit operation in which a set of backup application instances of the backup management system instance perform respective application-level data audits for validating respective portions of the data associated with the data center network. At block 1399, the method 1300 ends. The method 1300 may include the feature that the set of data associated with the data center network comprises at least one of configuration data, operational data, or files. The method 1300 may include the feature that the reconcile operation includes at least one of a data synchronization operation performed at a database collection level, a data synchronization operation performed at a database table level, or a data synchronization operation performed at a database row level. The method 1300 may include the feature that, for at least one of the backup application instances, the active synchronization state includes receiving, by the respective backup application instance from a respective active application instance of the active management system instance, additional data associated with the data center network. The method 1300 may include the feature that, for at least one of the backup application instances, the respective application-level data audit for the respective backup application instance includes determining that the respective portion of the data of the data center network is incomplete and reconstructing application-level data of the data center network available to the respective active application instance. The method 1300 may include the feature that the audit initiation includes providing, from a backup synchronization manager of the backup management system instance toward the respective backup application instances, respective requests for the backup application instances to perform the respective application-level data audits for validating the respective portions of the data associated with the data center network. The method 1300 may include the feature of initiate, by the backup management system instance based on a determination that the audit operation was completed successfully, activation of the backup management system instance to take over responsibility for management of the data center network. The method 1300 may include the feature that the determination that the audit operation was completed successfully is based on receipt, by a backup synchronization manager of the backup management system instance from the respective backup application instances, respective responses that the respective application-level data audits for validating the respective portions of the data associated with the data center network were completed successfully. The method 1300 may include the feature that the determination that the audit operation was completed successfully is based on receipt, by a backup synchronization manager of the backup management system instance from an active synchronization manager of the active management system instance, an indication that the respective application-level data audits for validating the respective portions of the data associated with the data center network were completed successfully. It will be appreciated that various other functions described within the context of FIG. 1, FIG. 2, and FIG. 11 as being supported by an active management system instance may be incorporated within the context of the method 1300 of FIG. 13.

Various example embodiments for supporting synchronization of management system instances of a management system providing management functions for a network may provide various advantages or potential advantages. For example, various example embodiments for supporting synchronization of management system instances of a management system providing management functions for a network may be configured to provide improved reliability and efficiency while supporting synchronization of the management system instances of the management system providing management functions for the network. For example, various example embodiments for supporting synchronization of management system instances of a management system providing management functions for a network may be configured to support synchronization of management system instances of the management system without requiring database level synchronization between the management system instances of the management system (e.g., in which the databases of the management system instances are fully synchronized between the management system instances based on sending of the full set of data of the databases on the active management system instance to the backup management instance), providing more intelligent synchronization between the management system instances of the management system in a manner tending to improve reliability and efficiency while supporting synchronization of the management system instances of the management system providing management functions for the network. For example, various example embodiments for supporting synchronization of management system instances of a management system providing management functions for a network may be configured to support synchronization of management system instances of the management system, without requiring database level synchronization between the management system instances of the management system, based on support for application-level database-independent control over synchronization of management system instances of the management system in which each active application instance of an active management system instance can individually determine which of its data is to be synchronized and which of its data does not need to be synchronized because the data is capable of being reconstructed by the corresponding backup application instance on the backup management system instance. For example, various example embodiments for supporting synchronization of management system instances of a management system providing management functions for a network may be configured to support synchronization of management system instances of the management system based on support for control over synchronization of management system instances of the management system using synchronization managers of the management system instances to coordinate synchronization between corresponding pairs of application instances providing management functions on the management system instances of the management system. For example, various example embodiments for supporting synchronization of management system instances of a management system providing management functions for a network may be configured to support synchronization of management system instances of the management system based on support for reconciliation and auditing within the context of synchronization of the management system instances of the management system providing management functions for the network. It will be appreciated that various example embodiments for supporting synchronization of management system instances of a management system providing management functions for a network may be configured to provide various other advantages or potential advantages.

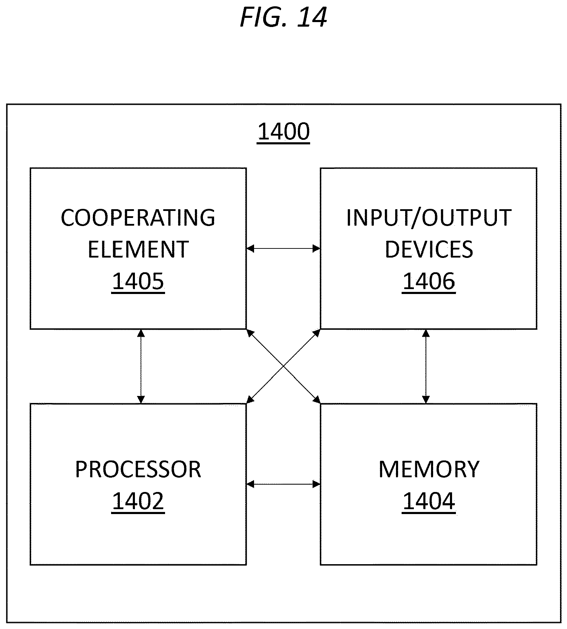

FIG. 14 depicts an example embodiment of a computer suitable for use in performing various functions presented herein.

The computer 1400 includes a processor 1402 and a memory 1404. The processor 1402 may be a processing unit (e.g., a central processing unit (CPU), a graphics processing unit (GPU), or the like) having one or more cores, a core of a processing unit, or the like. The memory 1404 may be a random access memory (RAM), a read-only memory (ROM), or the like. **In** at least some example embodiments, the computer 1400 may include at least one processor (e.g., processor 1402) and at least one memory (e.g., memory 1404) storing instructions that, when executed by the at least one processor, cause the computer 1400 to perform various functions presented herein.

The computer 1400 also may include a cooperating element 1405. The cooperating element 1405 may be hardware, firmware, software, or various combinations thereof. The cooperating element 1405 may be a process that can be loaded into the memory 1404 and executed by the processor 1402 to implement various functions presented herein (in which case, for example, the cooperating element 1405 (including associated data structures) can be stored on a non-transitory computer readable medium, such as a storage device or other suitable type of storage element (e.g., a magnetic drive, an optical drive, or the like)).

The computer 1400 also may include one or more input/output devices 1406. The input/output devices 1406 may include one or more of a user input device (e.g., a keyboard, a keypad, a mouse, a microphone, a camera, or the like), a user output device (e.g., a display, a speaker, or the like), one or more network communication devices or network communication elements (e.g., an input port, an output port, a receiver, a transmitter, a transceiver, or the like), one or more storage devices (e.g., a tape drive, a floppy drive, a hard disk drive, a solid state drive, or the like), or the like, as well as various combinations thereof.

It will be appreciated that computer 1400 may represent a general architecture and functionality suitable for implementing functional elements described herein, portions of functional elements described herein, or the like, as well as various combinations thereof. For example, the computer 1400 may provide a general architecture and functionality that is suitable for implementing one or more elements presented herein. For example, the computer 1400 may provide a general architecture and functionality that is suitable for implementing at least one of a server or a portion thereof, a switch or a portion thereof, an application instance or a portion thereof, a management system instance or a portion thereof or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
at least one processor; and
at least one memory storing instructions which, when executed by the at least one processor, cause the apparatus at least to:
receive, by an active application instance of an active management system instance, a set of data associated with a data center network;
store, by the active application instance using a data storage element of the active management system instance, the set of data associated with the data center network;
determine, by the active application instance, whether a backup application instance of a backup management system instance is able to reconstruct the set of data associated with the data center network; and
control, by the active application instance based on whether the backup application instance is able to reconstruct the set of data associated with the data center network, synchronization of the set of data from the active management system instance to the backup management system instance.

2. The apparatus of claim 1, wherein the determination as to whether the backup application instance is able to reconstruct the set of data associated with the data center network is based on at least one management function common to the active application instance and the backup application instance.

3. The apparatus of claims 1-2, wherein the determination as to whether the backup application instance is able to reconstruct the set of data associated with the data center network is based on at least one of a data type of data in the set of data of the data center network or an attribute of data in the set of data of the data center network.

4. The apparatus of claims 1-2, wherein the determination as to whether the backup application instance is able to reconstruct the set of data associated with the data center network is based on a database type of a database in which the active application instance stores the set of data of the data center network.

5. The apparatus of claims 1-4, wherein, to control synchronization of the set of data from the active management system instance to the backup management system instance, the instructions, when executed by the at least one processor, cause the apparatus at least to:
send, by the active application instance toward the backup application instance based on a determination that the set of data associated with the data center network cannot be reconstructed by the backup application instance, the set of data.

6. The apparatus of claims 1-4, wherein, to control synchronization of the set of data from the active management system instance to the backup management system instance, the instructions, when executed by the at least one processor, cause the apparatus at least to:
send, by the active application instance toward the backup application instance based on a determination that a first portion of data from the set of data associated with the data center network can be reconstructed by the backup application instance and a second portion of data from the set of data associated with the data center network cannot be reconstructed by the backup application instance, only the second portion of data from the set of data associated with the data center network.

7. The apparatus of claims 1-4, wherein, to control synchronization of the set of data from the active management system instance to the backup management system instance, the instructions, when executed by the at least one processor, cause the apparatus at least to:
perform, by the active application instance, synchronization of the set of data from the active management system instance to the backup management system instance based on at least one of a collection-level synchronization, a table-level synchronization, or a row-level synchronization.

8. The apparatus of claims 1-4, wherein, to control synchronization of the set of data from the active management system instance to the backup management system instance, the instructions, when executed by the at least one processor, cause the apparatus at least to:
receive, by the active application instance from a synchronization manager of the active management system instance, a request to perform a data synchronization operation with the backup application instance; and
provide, by the active application instance toward the synchronization manager, an indication that the data synchronization operation with the backup application instance has been completed.

9. The apparatus of claims 1-4, wherein the synchronization of the set of data from the active management system instance to the backup management system instance includes at least one of a heterogeneous data transfer, a database agnostic data transfer, a collection-level data transfer, a table-level data transfer, a row-level data transfer, or an attribute-based data transfer.

10. A method, comprising:
receiving, by an active application instance of an active management system instance, a set of data associated with a data center network;
storing, by the active application instance using a data storage element of the active management system instance, the set of data associated with the data center network;
determining, by the active application instance, whether a backup application instance of a backup management system instance is able to reconstruct the set of data associated with the data center network; and
controlling, by the active application instance based on whether the backup application instance is able to reconstruct the set of data associated with the data center network, synchronization of the set of data from the active management system instance to the backup management system instance.

11. An apparatus, comprising:
at least one processor; and
at least one memory storing instructions which, when executed by the at least one processor, cause the apparatus at least to:
receive, by a backup application instance of a backup management system instance from an active application instance of an active management system instance, a first set of data associated with a data center network;
identify, by the backup application instance, a second set of data associated with the data center network and available to the active application instance;
reconstruct, by the backup application instance, the second set of data associated with the data center network; and
store, by the backup application instance, the first set of data associated with the data center network and the second set of data associated with the data center network.

12. The apparatus of claim 11, wherein the receipt of the first set of data associated with the data center network is based on at least one of a heterogeneous data transfer, a database agnostic data transfer, a collection-level data transfer, a table-level data transfer, a row-level data transfer, or an attribute-based data transfer.

13. The apparatus of claims 11-12, wherein the identification of the second set of data associated with the data center network is based on at least one management function common to the active application instance and the backup application instance.

14. The apparatus of claim 11, wherein the identification of the second set of data associated with the data center network is based on at least one of a data type of data in the first set of data of the data center network or an attribute of data in the first set of data of the data center network.

15. A method, comprising:
receiving, by a backup application instance of a backup management system instance from an active application instance of an active management system instance, a first set of data associated with a data center network;
identifying, by the backup application instance based on the first set of data associated with the data center network, a second set of data associated with the data center network and available to the active application instance;
reconstructing, by the backup application instance, the second set of data associated with the data center network; and
storing, by the backup application instance, the first set of data associated with the data center network and the second set of data associated with the data center network.
